(19) Europäisches Patentamt
European Patent Office
Office européen des brevets

(11) EP 0 582 166 B2

(12) NEUE EUROPÄISCHE PATENTSCHRIFT

(45) Veröffentlichungstag und Bekanntmachung des Hinweises auf die Entscheidung über den Einspruch:
**23.08.2000 Patentblatt 2000/34**

(45) Hinweis auf die Patenterteilung:
**29.01.1997 Patentblatt 1997/05**

(21) Anmeldenummer: **93111916.8**

(22) Anmeldetag: **26.07.1993**

(51) Int. Cl.[7]: **D21H 17/08**, D21H 17/07, D21H 17/53, D21H 21/18, D21H 21/20

(54) **Chlorfreie multifunktionelle Harze für die Papierveredlung**

Multifuctional resins without chlorine for paper finishing

Résines multifonctionnelles sans chlore pour le finissage du papier

(84) Benannte Vertragsstaaten:
**CH DE ES FR GB IT LI NL SE**

(30) Priorität: **07.08.1992 DE 4226110**
**14.06.1993 DE 4319571**

(43) Veröffentlichungstag der Anmeldung:
**09.02.1994 Patentblatt 1994/06**

(73) Patentinhaber: **BAYER AG**
**51368 Leverkusen (DE)**

(72) Erfinder:
- **Reiners, Jürgen, Dr.**
  **D-51373 Leverkusen (DE)**
- **Laas, Hans-Josef, Dr.**
  **D-50733 Köln (DE)**
- **König, Joachim, Dr.**
  **D-51519 Odenthal (DE)**
- **Reiff, Helmut, Dr.**
  **D-51375 Leverkusen (DE)**
- **Probst, Joachim, Dr.**
  **D-51375 Leverkusen (DE)**
- **Bömer, Bruno, Dr.**
  **D-51467 Bergisch Gladbach (DE)**
- **Halpaap, Reinhard, Dr.**
  **D-51519 Odenthal (DE)**
- **Puchner, Fritz, Dr.**
  **D-50996 Köln (DE)**
- **Träubel, Harro, Dr.**
  **D-51373 Leverkusen (DE)**

(56) Entgegenhaltungen:
**EP-A- 0 074 544**
**EP-A- 0 207 414**
**US-A- 3 178 310**
**US-A- 3 589 978**
**US-A- 4 238 594**
**US-A- 4 296 230**
**US-A- 4 505 778**



Printed by Xerox (UK) Business Services
2.16.7 (HRS)/3.6

## Beschreibung

Polyamin-Epichlorhydrin-Harze und Polyamidamin-Epichlorhydrin-Harze mit einem verminderten organischen Chlorgehalt sind technisch verfügbar, wobei die anwendungstechnischen Produkteigenschaften, insbesondere die Wirksamkeit der Produkte nahezu vollständig erhalten bleibt. Solche Harze werden seit langem zur Verbesserung der Trocken- und Naßfestigkeil von Papier eingesetzt. Kationische Polykondensate mit hydrophoben Resten z.B. auf Basis fettsäuremodifizierter Polyamine sind auch als Leimungsmittel für Papier geeignet. Der organische Chlorgehalt setzt sich zusammen aus einem bestimmten Anteil an Chlorhydrinfunktionen, die in dem Harz gebunden vorliegen, und einem Chloranteil, der aus niedermolekularen Nebenkomponenten Chlorpropandiol und Dichlorpropanol stammt.

Bei der Anwendung als Naßfestmittel wird eine wäßrige Losung des Polykondensats zu einer Zellstoffsuspension gegeben, aus der durch Entwässerung das Papierblatt gebildet wird. Bei unvollständiger Adsorption der Harze an die Cellulose gelangt im Fall eines halogenhaltigen Naßfestmittels ein bestimmter Anteil an organischen Halogenverbindungen in das Abwasser der Papierfabrikation, der dort als sog. AOX-Wert (AOX = adsorbierbares organisches Halogen) erfaßt werden kann (DIN 38 409 H14). Aus Gründen des Umweltschutzes sollte ein AOX-Eintrag in das Abwasser der Papierfabriken vermieden oder doch so gering wie möglich gehalten werden.

Obwohl der Anteil der Nebenkomponente in vielen Produkten bereits weit unter 0,1 % liegt, ist es erwünscht, chlorfreie Produkte einzusetzen.
Halogenfreie Papiere sind auf Basis der oben genannten Hilfsmittel nicht zu verwirklichen. Der Begriff "halogenfrei" ist hier im strengen Sinne nur für solche Produkte zu gebrauchen, die tatsächlich <u>kein Halogen</u> enthalten.

Weiterhin sind aus dem Stand der Technik bereits Methoden zur chlorfreien Naßfestausrüstung bekannt, wobei Isocyanate als Rohstoffe eingesetzt werden. Dabei sind folgende Vorgehensweisen möglich: 1. das Behandeln von Papier mit verkappten Polyisocyanaten, 2. Einsatz reaktiver Gemische, die sich im Substrat zum Polyurethan umsetzen, 3. das Behandeln von Papier mit freien Polyisocyanaten in organischen Lösungsmitteln.
Die bekannten Naßfestmittel sind jedoch nicht in allen Anforderungen zufriedenstellend.

Die DE-A 3 102 038 beschreibt basische Polyurethane, die über Oximgruppen blockierte Isocyanate enthalten, die bei der Reaktion mit der Cellulose abgespalten werden. Nachteil bei dieser Methode ist, daß organische Reste, die nicht substantiv gegenüber Cellulose sind, in das Kreislaufwasser der Papiermaschine gelangen können.

In der FR-A 2 360 714 wird zur Beschichtung von Papier ein Zwei-Komponenten-System vorgeschlagen, bestehend aus einem polyfunktionellen Isocyanat und einer gegenüber Isocyanaten reaktiven, aktiven Wasserstoff enthaltenden Verbindung. Das fertige Papier enthält am Ende 0,5 bis 35 Gew.-% ausreagiertes Polyurethan.

Die EP-A 0 017 598 beschreibt wäßrige Dispersionen von Polyurethanen, deren Isocyanatgruppen blockiert sind. Die Isocyanatgruppen müssen nach dem Auftrag auf das Substrat durch Zusatz eines Metallkatalysators oder eines Salzes eines tertiären Amins demaskiert werden. Die dabei freigesetzten Isocyanat-Gruppen reagieren bei der Wärmebehandlung mit der Cellulose.

In der US-A 3 702 781 sind Polyurethane mit reaktiven NCO-Gruppen beschrieben, die in organischen Lösungsmitteln auf Papier appliziert werden.

Bei dem Verfahren gemäß DE-A 3 102 038 muß die Isocyanatgruppe in situ durch Deblockierung von Schutzgruppen erzeugt werden. Nachteilig ist dabei, daß die Schutzgruppen nicht faseraffin sind und deshalb in den Wasserkreislauf der Papiermaschine eingetragen werden können. Außerdem sind zur Deblockierung höhere Temperaturen (>130°C) erforderlich als solche, die das Papier während des Durchlaufs durch die Trockenpartie der Papiermaschine erreicht. Die Kontaktzeiten in der Trockenpartie (<60 Sekunden) reichen in der Regel nicht aus, um eine quantitative Deblockierung zu erzielen. Im Falle der US-A 3 702 781, in der freie Isocyanate eingesetzt werden, ist man wegen der hohen Viskosität auf die Verwendung von organischen Lösungsmitteln angewiesen, die vom Papier-Hersteller entsorgt werden müssen und die daher möglichst vermieden werden sollten.

In Wasser dispergierbare Polyisocyanat-Zubereitungen, die freie NCO-Gruppen enthalten und als Zusatzmittel für wäßrige Klebstoffe geeignet sind, sind aus der EP-A 0 206 059 bekannt.

Aus der DE-A 2 557 409 sind Harzsäureisocyananate bekannt, die sich in Gegenwart nichtionischer und anionischer Emulgatoren in Wasser dispergieren lassen.

Die in der DE-A 2 839 310 vorgeschlagenen Dispersionen oder Emulsionen von Carbamoylsulfonaten aus Isocyananaten und Alkali- und Ammoniumbisulfiten können als Leimungsmitttel eingesetzt werden.

Aus der US-A 4 505 778 sind Masse- und Oberflächenleimungsmittel bekannt, die aus Mischungen von aromatischen Polyisocyanaten bestehen, die 1-10 Gew.-% eines Isocyanat-Präpolymer enthalten, das z.B. durch Umsetzung von aromatischen Polyisocyanaten mit monofunktionellen Polyethern erhalten wird.

Außerdem sind verschiedene Polyurethan- oder Polyharnstoff-Dispersionen bekannt, die als Leimungsmittel eingesetzt werden können. Diese meist anionischen Produkte (vgl. DE-A-2 457 972) weisen jedoch keine reaktiven Gruppen in Form von Isocyanatgruppen auf. Beispiele für solche Produkte finden sich in folgenden Dokumenten: FR-A 1 496 584, US-A 3 989 659, DE-A 2 537 653, EP-A 0 037 379, DE-A 3 438 563 und EP-A 0 207 414.

Auch Latices auf Basis von Diurethanen wurden als Leimungsmittel vorgeschlagen (vgl. EP-A 0 232 196).

Diese Produkte sind jedoch nicht in allen Anforderungen zufriedenstellend. Insbesondere sind die Stabilität oder Dispergierbarkeit in Wasser oft schlecht oder es sind kationische Zusätze erforderlich, um die Eigenretention des Harzes zu verbessern. In der EP-A 0 074 544 sind Dispersionen beschrieben, die eine disperse Phase aus 1. verstärktem Harzleim und 2. hydrophobem Ketendimer oder hydrophoben Isocyanaten mit mindestens 12 C-Atomen enthalten, wobei zur Verbesserung der Eigenschaften ein kationisches Dispergiermittel (unter anderem ein Polyamidamin-Epichlorhydrin-Harz) eingesetzt wird.

Darüber hinaus wäre es für den Anwender vorteilhaft, ein Hilfsmittel zu haben, das dem Papier Naß- und Trockenfestigkeit und gleichzeitig auch Teilhydrophobie verleiht, d.h. als Masse- oder Oberflächenleimungsmittel geeignet ist.

Es bestand daher die Aufgabe, ein neues Verfahren zur Naß- und Trockenfestausrüstung und/oder Leimung von cellulosehaltigem Material mittels eines chlorfreien Produktes auf Basis unblockierter Polyisocyanate, das sich ohne Zusatz von Emulgatoren in Wasser emulgieren läßt und bei Einsatz in Masse und Oberfläche in einem breiten pH-Bereich die Naßfestwirkung der Polyamidamin-Epichlorhydrin-Harze erreicht, bereitzustellen.

Es wurde nun überraschend gefunden, daß sich wasserdispergierbare Polyisocyanatgemische, die tertiäre Aminogruppen, welche auch in Form ihrer Salze, d.h. in protonierter oder quaternierter Form vorliegen können, und die gegebenenfalls hydrophobe Gruppen und gegebenenfalls Polyether-Einheiten enthalten, hervorragend als Trocken- und Naßfestmittel für cellulosehaltiges Material und darüber hinaus auch auch Leimungsmittel d.h. zur Teilhydrophobierung von cellulosehaltigem Material eignen, wobei der Einsatz vor der Blattbildung (Masse-Einsatz), d.h. als Zusatz zur Faserstoff-Suspension, sowie in der Oberfläche, d.h. als Aufgabe auf ein bereits gebildetes Papierblatt, erfolgen kann.

Die vorliegende Erfindung betrifft ein Verfahren zur Herstellung von trockenfest und naßfest ausgerüstetem und/oder geleimtem cellulosehaltigem Material, dadurch gekennzeichnet, daß das cellulosehaltige Material mit einem wasserdispergierbaren Polyisocyanatgemisch (I) mit

α) einem Gehalt an Isocyanatgruppen von 10 bis 700 Milliäquivalenten pro 100 g Gemisch
β) einer mittleren NCO-Funktionalität von ≥ 1,0,
γ) einem Gehalt an Ethylenoxid-Einheiten von 0 bis 30 Gew.-%. bezogen auf das Gemisch, wobei
die Polyethylenoxidkette ein mittleres Molgewicht (Zahlenmittel) von 100 bis 3 500, bevorzugt 100 bis 1000, besonders bevorzugt 100 bis 600 g/mol hat,
δ) einem Gehalt an tertiären Aminogruppen bzw. durch deren Protonierung und/oder Quaternierung erhaltenen Ammoniumgruppen von 50 bis 146.8 Milliäquivalenten pro 100 g Gemisch
und
ε) einem Gehalt an hydrophoben Resten von 0-250 Milliäquivalenten pro 100 g Gemisch behandelt wird, dadurch gekennzeichnet, daß die wasserdispergiebaren Polyisocyanate (I) erhältlich durch Umsetzung von

II)

A) Aminen, die eine gegenüber Isocyanaten reaktive Gruppe enthalten, der Formel

A1)

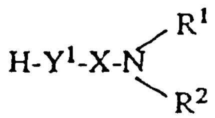

,

in welcher

$Y^1$ für -O-, -NH- oder -$NR^3$- steht, wobei $R^3$ für Methyl oder Ethyl steht,
$R^1$ und $R^2$

a) unabhängig voneinander für $C_1$-$C_4$-Alkyl oder $C_3$-$C_6$-Cycloalkyl stehen,
b) für einen Rest der Formel

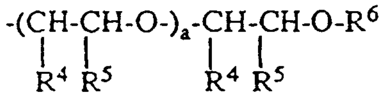

stehen
wobei $R^4$ und $R^5$ unabhängig voneinander für Wasserstoff oder Methyl stehen, mit der Bedingung, daß immer einer der Reste für Wasserstoff steht,

$R^6$ für Methyl oder Ethyl steht und
a Werte von 0 bis 10 annimt oder

c) für einen durch eine oder mehrere tertiäre Aminogruppen und/oder Ammoniumgruppen substituierten $C_2$-$C_4$-Alkylrest der Formeln

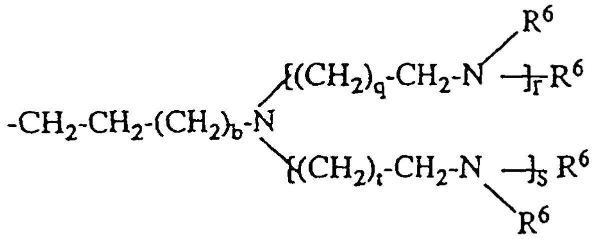

oder

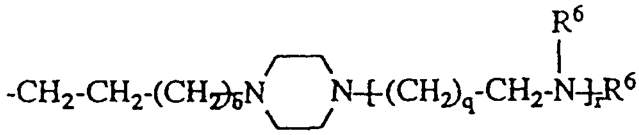

wobei

| | |
|---|---|
| b | Werte von 0 bis 2 annimmt, |
| q und 1 | unabhängig voneinander Werte von 1 oder 2 annehmen, |
| r und s | unabhängig voneinander Werte von 0 bis 3 annehmen und |
| $R^6$ | die obengenannte Bedeutung hat, |

stehen, oder
d) gemeinsam mit dem N-Atom, an das sie gebunden sind, einen 5- oder 6-gliedrigen Ring der Formel

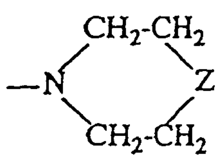

bilden, wobei

Z für >O oder

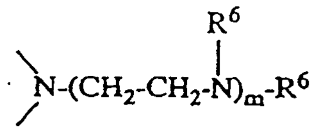

oder

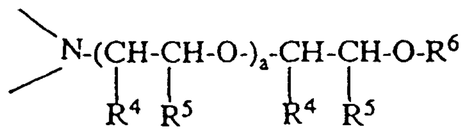

steht,
wobei m Werte von 0 bis 2 annimmt und

a. $R^4$, $R^5$ und $R^6$ die obengenannte Bedeutung haben,

X für $C_2$- bis $C_{10}$-Alkylen, $C_5$ bis $C_{10}$-Cycloalkylen, einen Rest der Formel

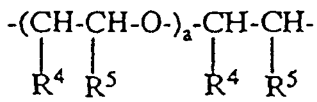

wobei $R^4$, $R^5$ und a die obengenannte Bedeutung haben,

oder einen Rest der Formel

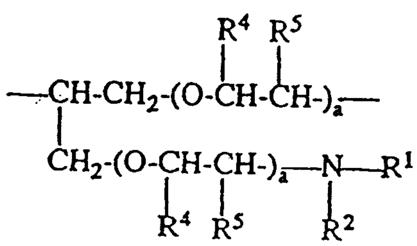

in welcher,

a, $R^4$ $R^5$, $R^1$ und $R^2$ die obengenannte Bedeutung haben,

oder

A 2) der Formel

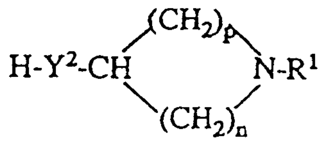

worin

| | |
|---|---|
| $Y^2$ | für -O-, -NH- oder $NR^3$- steht, wobei $R^3$ die obengenannte Bedeutung hat, |
| n und p | unabhängig voneinander Werte von 1 oder 2 annehmen |
| und $R^1$ | die obengenannte Bedeutung hat |

oder
A 3) der Formel

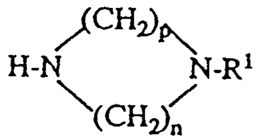

wobei n, p und $R^1$ die obengenannte Bedeutung haben
oder
A 4) der Formel

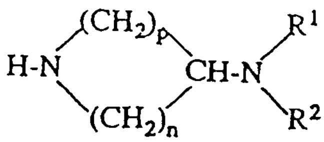

worin

n, p, $R^1$ und $R^2$ die obengenannte Bedeutung haben,

oder
C) den durch Umsetzung von A) durch Protonierung und/oder Quaternierung erhaltenen Ammoniumgruppen enthaltenden gegenüber Isocyanaten reaktiven Verbindungen oder
beliebigen Gemischen aus A) und C)
mit

III) Polisocyanaten E), wobei

es sich bei den Polyisocyanaten E) um im wesentlichen aus trimerem 1,6-Dies sich bei den Polyisocyanaten E) um im wesentlichen aus trimerem 1,6-Diisocyanatohexan oder 1-Isocyanato-3.3.5-trimethy-5-isocyanatomethyl-cyclohexan und gegebenenfalls dimerem 1,6-Diisocyanatohexan oder 1-Isocyanato-3,3,5-trimethyl-5-isocyanatomethyl-cyclohexan und den entsprechenden _______ höheren Homologen bestehenden Isocyanuratgruppen und gegebenenfalls Uretdiongruppen aufweisenden Polyisocyanatgemischen mit einem NCO-Gehalt von 19 bis 24 Gew.-%. handelt, mit

- einer mittleren NCO-Funktionalität von 2,0 bis 8,0, vorzugsweise 2,0 bis 6.0, besonders bevorzugt 2,1

bis 4,4 und insbesondere von 2,3 bis 4,3, und

- einem Gehalt an Isocyanatgruppen von 10 bis 50 Gew.-%, vorzugsweise 19 bis 24 Gew.-%, bezogen auf das Gemisch III),

gegebenenfalls mit

IV) C4-$C_{30}$-Kohlenwasserstoffen G) die geradkettig oder verzweigt, gesättigt oder ein- oder mehrfach ungesättigt sind und mindestens eine gegenüber Isocyanaten reaktive Gruppe aufweisen, und gegebenenfalls mit
V) ein- oder mehrwertigen, im statistischen Mittel 5,0 bis 70 Ethylenoxideinheiten aufweisenden, gegebenenfalls Estergruppen enthaltenden Polyalkylenoxidpolyetheralkoholen F), in beliebiger Reihenfolge.

Im Sinne der Erfindung geeignete wasserdispergierbare Polyisocyanatgemische (I) sind.

**(Ia) Polyisocyanatgemische aus**

1) tertiäre Amino- und/oder durch deren Protonierung und/oder Quaternierung erhaltenen Ammoniumgruppen enthaltenden Polyisocyanaten und
2) Polyisocyanaten E),

**(Ib) Polyisocyanatgemische aus**

1) tertiäre Amino- und/oder durch deren Protonierung und/oder Quaternierung erhaltenen Ammoniumgruppen enthaltenden Polyisocyanaten,
2) Polyisocyanaten E),
3) tertiäre Amino- und/oder Ammoniumgruppen und Polyethergruppen enthaltenden Polyisocyanaten, und
4) Polyethergruppen enthaltenen Polyisocyanaten,

**(Ic) Polyisocyanatgemische aus**

1) tertiäre Amino- und/oder durch deren Protonierung und/oder Quaternierung erhaltenen Ammoniumgruppen enthaltenden Polyisocyanaten,
2) Polyisocyanaten E),
5) tertiäre Amino- und/oder durch deren Protonierung und/oder Quaternierung erhaltenen Ammoniumgruppen und hydrophobe Gruppen enthaltenden Polyisocyanaten, und
6) hydrophobe Gruppen enthaltenen Polyisocyanaten,

**(Id) Polyisocyanatgemische aus**

1) tertiäre Amino- und/oder durch deren Protonierung und/oder Quaternierung erhaltenen Ammoniumgruppen enthaltenden Polyisocyanaten,
2) Polyisocyanaten E),
3) tertiäre Amino- und/oder durch deren Protonierung und/oder Quaternierung erhaltenen Ammoniumgruppen und Polyethergruppen enthaltenden Polyisocyanaten,
4) Polyethergruppen enthaltenen Polyisocyanaten,
5) tertiäre Amino- und/oder Ammoniumgruppen und hydrophobe Gruppen enthaltenden Polyisocyanaten,
6) hydrophobe Gruppen enthaltenen Polyisocyanaten,
7) tertiäre Amino- und/oder Ammoniumgruppen, hydrophobe Gruppen und, Polyethergruppen enthaltenden Polyisocyanaten, und
8) Polyethergruppen und hydrophobe Gruppen enthaltenden Polyisocyanaten, oder Gemische der Polyisocyanatgemische (Ia) bis (Id).

Die Polyisocyanatgemische (Ia) und (Id) sind besonders bevorzugt zur Leimung sowie Naß- und Trockenfestausrüstung von cellulosehaltigem Materal geeignet. Die Polyisocyanatgemische (Ib) eignen sich insbesondere zur Naß- und Trockenfestausrüstung von cellulosehaltigem Material. Die Polyisocyanatgemische (Ic) sind insbesondere zur Leimung von cellulosehaltigem Material geeignet.
Besonders bevorzugt werden wasserdispergierbare Polyisocyanatgemische (I) mit

$\alpha$) einem Gehalt an Isocyanatgruppen von 10 bis 300 Milliäquivalenten pro 100 g Gemisch,

β) einer mittleren NCO-Funktionalität von 1,0 bis 5,

γ) einem Gehalt an Ethylenoxid-Einheiten von 0 bis 20 Gew.-%, bezogen auf das Gemisch, wobei die Polyethylenoxidkette ein mittleres Molgewicht (Zahlenmittel) von 100 bis 3 500, bevorzugt 100 bis 1 000, besonders bevorzugt 100 bis 600 g/mol hat,

δ) einen Gehalt an tertiären Aminogruppen bzw. durch deren Protonierung und/oder Quaternierung erhaltenen Ammoniumgruppen von 50 bis 146.8 Milliäqivalenten pro 100 g Gemisch

und

ε) einen Gehalt an hydrophoben Resten von 0-100 Milliäquivalenten pro 100 g Gemisch,

für das erfindungsgemäße Verfahren eingesetzt.

Die Erfindung behilft weiterhin eine Verfahren zur Herstellung von trockenfest und naßfest ausgerüstetem und/oder geleimtem cellulosehaltigem Material, dadurch gekennzeichnet, dass das cellulose haltige Material mit einem wasserdispergierbaren Polyisocyanatgemische (I) mit

α) einem Gehalt an Isocyanatgruppen von 47 bis 595 Milliäquivalenten, vorzugsweise 238 bis 476 Milliäquivalenten, bezogen auf 100 g Gemisch,

β) einer mittleren NCO-Funktionalität von 1,5 bis 4,2, vorzugsweise 2,0 bis 4,2,

γ) einem Gehalt an Ethylenoxid-Einheiten von 7 bis 30 Gew.-%, vorzugsweise 7 bis 20 Gew.-%, bezogen auf das Gemisch, wobei die Polyethylenoxidkette ein mittleres Molgewicht (Zahlenmittel) von 100 bis 3 500, bevorzugt 100 bis 1 000, besonders bevorzugt 100 bis 600 g/mol hat,

und

δ) einem Gehalt an tertiären Aminogruppen bzw. durch deren Protonierung und/oder Quaternierung erhaltenen Ammoniumgruppen von 1 bis 146.8 Milliäqivalenten vorzugsweise 5 bis 146.8 Milliäquivalenten pro 100 g Gemisch behandelt wird,

dadurch gekennzeichnet, daß die

wasserdispergierbaren Polyiscocyanatgemische (1) sind erhältlich durch Umsetzung in beliebiger Reihenfolge von

II) (cyclo)aliphatischen, gegebenenfalls Ether-, Ester- oder Amidgruppen enthaltenden Aminen, die mindestens eine gegenüber Isocyanaten reaktive Gruppe enthalten und die mindestens eine tertiäre Aminogruppe und/oder durch deren Protonierung und/oder Quaternierung erhaltenen Ammoniumgruppe enthalten, oder deren Gemischen mit

III) Polisocyanaten E) , wobei es sich bei den Polyisocyanaten E) um im wesentlichen aus trimerem 1.6-Diisocyanatohexan oder 1-Isocyanato-3.3.5-trimethyl-5-isocyanatomethyl-cyclohexan und gegebenenfalls dimerem 1.6-Diisocyanatohexan oder 1-Isocyanato-3.3.5-trimelhyl-5-isocyanatomethyl-cyclohexan und den entsprechenden höheren Homologen bestehenden Isocyanuratgruppen und gegebenenfalls Uretdiongruppen aufweisenden Polyisocyanatgemischen mit einem NCO-Gehalt von 19 bis 24 Gew.-%. handelt,

und gegebenenfalls mit

IV) $C_4$-$C_{30}$-Kohlenwasserstoffen G), die geradkettigt oder verzweigt, gesättigt oder ein- oder mehrfach ungesättigt sind und mindestens eine gegenüber Isocyanaten reaktive Gruppe enthalten

und gegebenenfalls mit

V) gegebenenfalls Estergruppen enthaltenden Polyalkylenoxidpolyetheralkoholen F),

wobei das Äquivalentverhältnis von eingesetzten NCO-Gruppen der Komponente III) zu der Summe der gegenüber Isocyanaten reaktiven Gruppen der Komponenten II), IV) und 4:1 bis ca 1 000:1, beträgt.

Die angegebenen Werte der NCO-Funktionalität der gemäß dem erfindungsgemäßen Verfahren einzusetzenden wasserdispergierbaren Polyisocyanate beziehen sich auf den Wert, der sich aus Art und Funktionalität der Ausgangskomponenten nach der Formel

$$f = \frac{\Sigma valNCO - \Sigma valOH}{\Sigma mol(NCO+OH) - \Sigma valOH}$$

errechnen läßt.

Der Gehalt an Isocyanatgruppen ist jeweils berechnet als NCO mit einem Molekulargewicht von 42 g/mol.

Gegenstand der Erfindung ist auch die Werwendung von den entsprechenden durch Protonierung und/oder Quaternierung der obengenannten Polyisocyanatgemische, die tertiäre Aminogruppen enthalten, erhältlichen wasserdispergierbaren Polyisocyanate, wobei zur Alkylierung Alkylierungsmittel wie z.B. Dimethylsulfat, Diethylsulfat oder $C_1$- bis $C_4$-Alkylhalogenide und -sulfonate verwendet werden.

Gegenstand der Erfindung ist auch die Verwendung von wäßrigen Dispersionen der erfindungsgemäß eingeseten Polyiscoyanate und die darin gegebenenfalls enthaltenen, Harnstoffgruppen enthaltenden Hydrolyseprodukte der erfindungsgemäß Verwendeten wasserdispergierbaren, tertiäre Aminogruppen bzw. Ammoniumgruppen enthaltenden Polyisocyanate (1).

Der Begriff "wasserdispergierbar" im Zusammenhang mit den Polyisocyanatgemischen (I) bedeutet, daß es sich um Gemische handelt, die in einer Konzentration von bis zu 70 Gew.-%, vorzugsweise bis zu 50 Gew.-% in Wasser feinteilige Dispersionen mit Partikelgrößen (Ultrazentrifuge) vom < 500 nm ergeben.

Unter "hydrophoben Gruppen" sind im Sinne dieser Erfindung solche Gruppen zu verstehen, die sich von $C_4$-$C_{30}$-Kohlenwasserstoffen G), die geradkettig oder verzweigt, gesättigt oder ein- oder mehrfach olefinisch ungesättigt sind und mindestens eine gegenüber Isocyanaten reaktive Gruppe aufweisen, ableiten.

Zur Durchführung des erfindungsgemäßen Verfahrens sind auch die entsprechenden, durch Protonierung und/oder Quaternierung der erfindungsgemäß einzusetzenden wasserdispergierbaren Polyisocyanatgemische (I) erhältlichen Ammoniumgruppen aufweisenden wasserdispergierbaren Polyisocyanatgemische geeignet. Zur Quaternierung können Alkylierungsmittel wie z.B. Dimethylsulfat, Diethylsulfat oder $C_1$-$C_4$-Alkylhalogenide und -sulfonate, verwendet werden.

Als Amine II) A) seien beispielsweise genannt:

N,N-Dimethylethylendiamin, N,N-Dimethylpropylendiamin, Dimethylaminohydroxyethan, Dimethylaminohydroxypropan, Diethylaminohydroxyethan, Dibutylaminohydroxyethan, Diethylaminoethoxyhydroxyethan, (2-Diethylaminoethoxy)-ethoxyhydroxyethan, N,N'-Triethyl-N'-[ω-hydroxy-tetraethoxyethyl]propylendiamin, N-Hydroxyethyl-morpholin, N-Hydroxyethyl-methylpiperazin, N-Hydroxyethylpiperidin, N-Hydroxyethylpyrrolidin, 4-Hydroxy-N-methylpiperidin, 4-Hydroxy-1-dimethylaminocyclohexan, 1,3-Bis(dimethylamino-ethoxy-ethoxy)-2-hydroxypropan, 1,3-Bis(dimethylaminopropoxy)-2-hydroxypropan sowie die Amine der folgenden Formeln:

$(C_2H_5)_2N-(CH_2)_3-NH_2$,

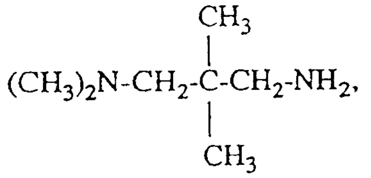

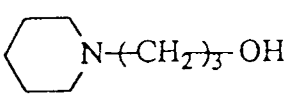

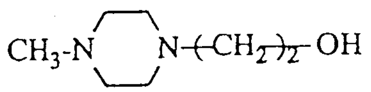

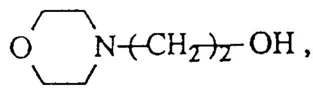

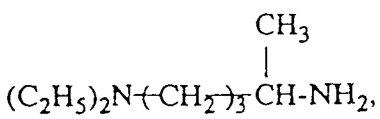

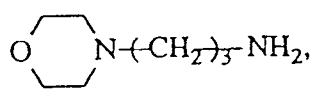

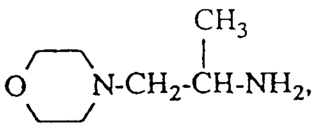

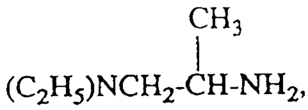

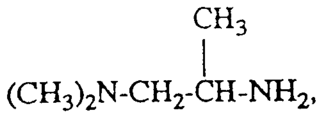

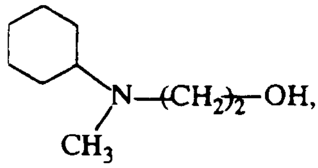

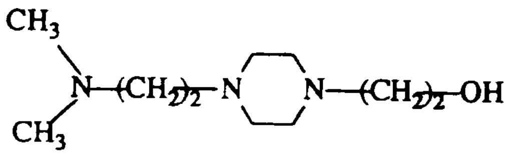

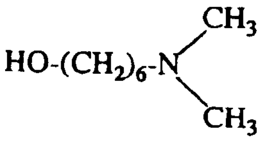

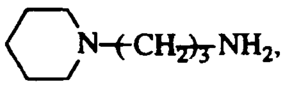 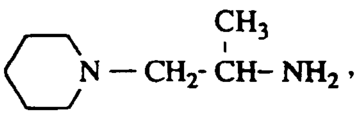 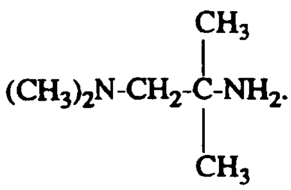

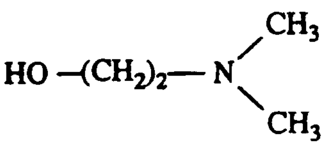 , 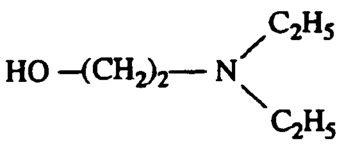

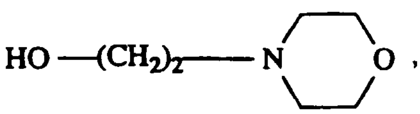 , 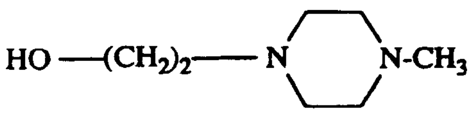

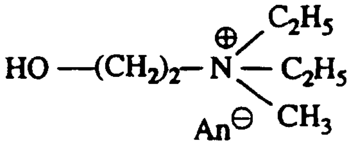

mit An⊖ = $CH_3OSO_3$⊖, Cl⊖, Br⊖

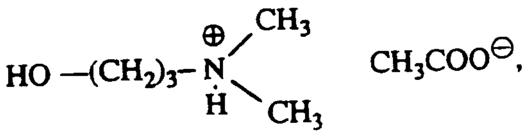 ,

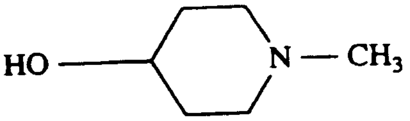 ,

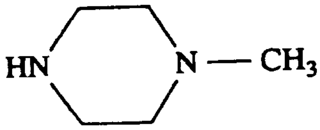

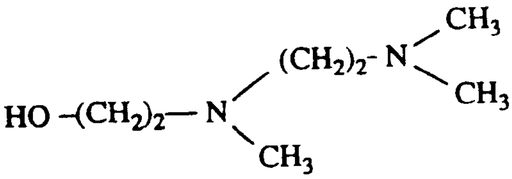 ,

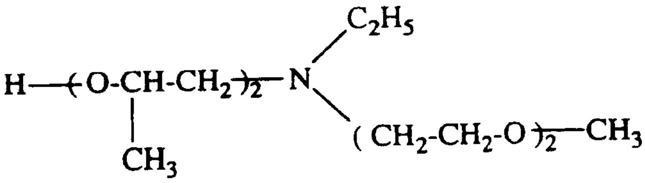

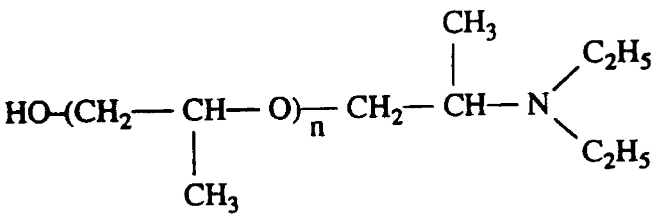

mit n= 1-10

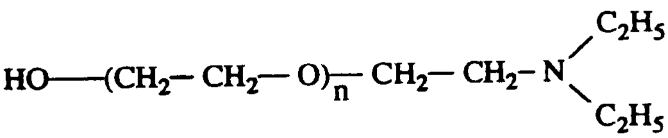

mit n= 1-10

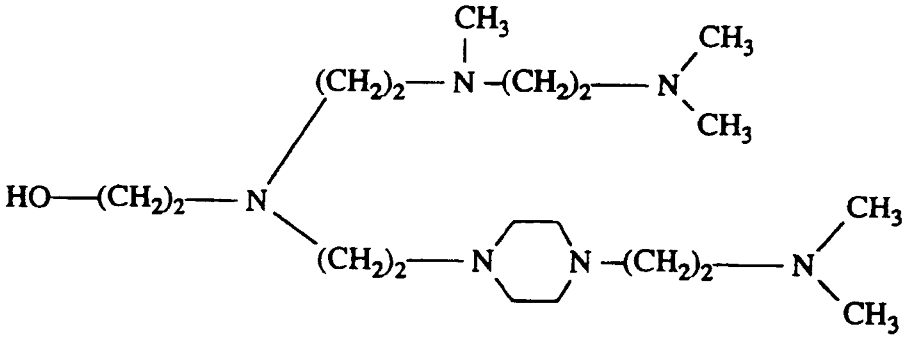

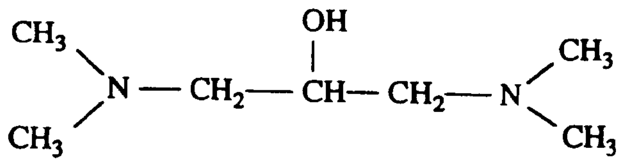

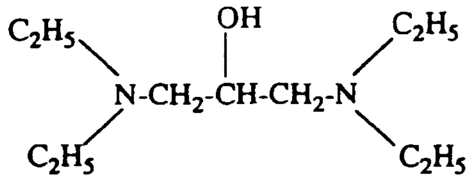

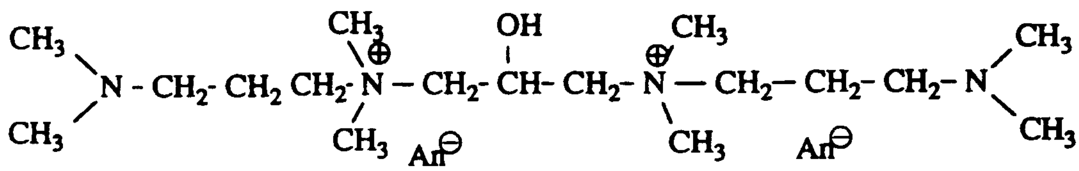

mit An⊖ = Cl⊖, Br⊖, $CH_3OSO_3$⊖

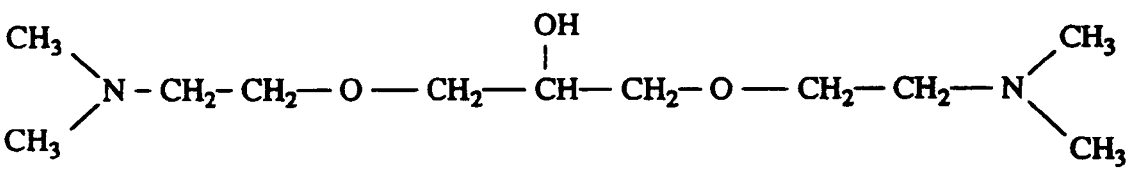

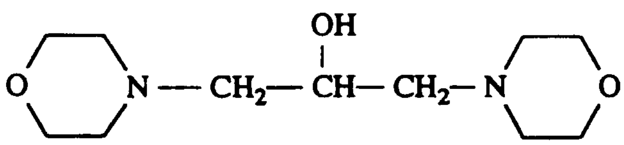

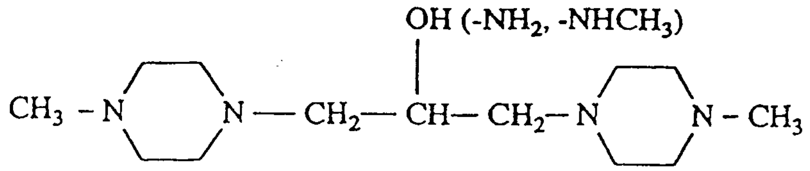

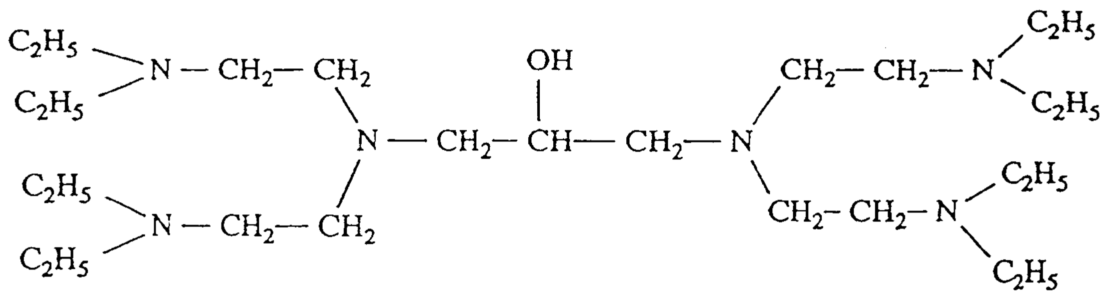

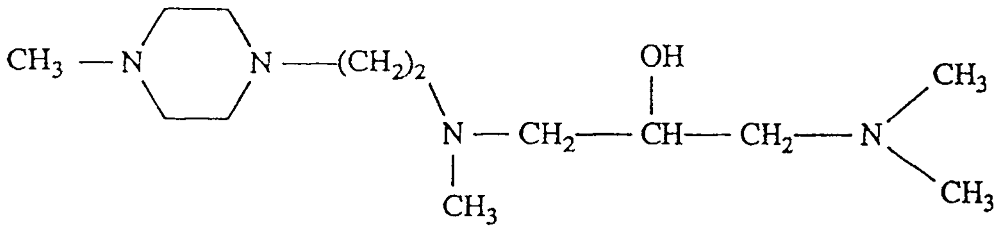

Geeignete Amine II) C) sind beispielsweise die durch Umsetzung von Säuren oder Alkylierungsmitteln mit den Komponenten II) A) erhältlachen Amine, deren tertiäre Aminogruppen ganz oder zum Teil in Ammoniumgruppen umgewandelt wurden.

Für diese Umsetzung geeignete Säuren sind vorzugsweise Essigsäure, Ameisensäure und HCl, als Alkylierungsmittel kommen beispielsweise $C_1$-$C_4$-Alkylchloride und -bromide sowie Dialkylsulfate wie Dimethylsulfat oder Diethylsulfat in Frage.

Besonders bevorzugt werden als Komponente E) die entsprechenden, weitgehend Uretdiongruppen-freien, Isocyanuratgruppen aufweisenden Polyisocyanate des genannten NCO-Gehaltes eingesetzt, wie sie durch an sich bekannte, katalytische Trimerisierung und unter Isocyanurat-Bildung von 1,6-Diisocyanatohexan oder 1-Isocyanato-3,3,5-trimethyl-5-isocyanatomethylcyclohexan erhalten werden und die vorzugsweise eine (mittlere) NCO-Funktionalität von 3,2 bis 4,2 aufweisen. Bevorzugte Komponenten E) sind auch die durch Reaktion von 1,6-Diisocyanatohexan mit einem Unterschuß an Wasser in bekannter Weise erhaltenen, im wesentlichen Biuretgruppen aufweisenden trimeren Polyisocyanate mit einem NCO-Gehalt von 19 bis 24 Gew.-%.

Kohlenwasserstoffe G) sind solche mit 4 bis 30 C-Atomen, die geradkettig oder verzweigt, gesättigt oder ein- oder mehrfach olefinisch ungesättigt sind und die mindestens eine gegenüber Isocyanaten reaktive Gruppe aufweisen. Unter reaktiven Gruppen sind Amino-, Hydroxy- und Carboxylgruppen zu verstehen. Beispielsweise seien folgende Kohlenwasserstoffe G) genannt:
Stearylalkohol, Stearylamin, Stearinsäure, Dodecanol, Hexanol, Undecanol, 2-Ethylhexanol, Hexadecylamin, Hexadecanol, Dehydroabietylalkohol, Behenylalkohol, Behensäure, Ölsäure, Linolsäure, Oleylalkohol, 7(8)-Hydroxy-tricyclo-$[5.2.1.0^{2.6}]$dec-3(4)-en, Hexahydrophthalsäure, 11-Hydroxystearinsäure, 1-Hydroxy--undec-10-en.

Bei den unter V) genannten Polyalkylenoxidpolyetheralkoholen F) handelt es sich um ein- oder mehrwertige im statistischen Mittel 5 bis 70, vorzugsweise 6 bis 60 Ethylenoxideinheiten pro Molekül enthaltende Polyalkylenoxidpolyetheralkohole, wie sie in an sich bekannter Weise durch Alkoxylierung geeigneter Startermoleküle zugänglich sind.

Zur Herstellung der Polyalkylenoxidpolyetheralkohole F) können beliebige ein-oder mehrwertige Alkohole des Molekulargewichtsbereichs 32 bis 150 g/mol, wie sie beispielsweise auch gemäß EP-A 0 206 059 Verwendung finden, als Startermoleküle eingesetzt werden. Bevorzugt werden als Startermoleküle monofunktionelle aliphatische Alkohole mit 1 bis 4 Kohlenstoffatomen verwendet. Besonders bevorzugt ist die Verwendung von Methanol.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen F) handelt es sich entweder um reine Polyethylenoxidpolyether oder um gemischte Polyalkylenoxidpolyether, die mindestens eine Polyethersequenz aufweisen, die mindestens 5, im allgemeinen 5 bis 70, vorzugsweise 6 bis 60 und besonders bevorzugt 7 bis 20, Ethylenoxideinheiten besitzt, und deren Alkylenoxideinheiten zu mindestens 60 Mol-%, vorzugsweise zu mindestens 70 Mol-%, aus Ethylenoxideinheiten bestehen.

Bevorzugte Polyalkylenoxidpolyetheralkohole F) sind monofunktionelle, auf einem aliphatischen, 1 bis 4 Kohlenstoffatome aufweisenden Alkohol gestarteten Polyalkylenoxidpolyether, die im statistischen Mittel 6 bis 60 Ethylenoxideinheiten enthalten. Besonders bevorzugte Polyalkylenoxidpolyetheralkohole F) sind reine Polyethylenglykolmonomethyletheralkohole, die im statistischen Mittel 7 bis 20 Ethylenoxideinheiten aufweisen.

Geeignete estergruppenhaltige Polyalkylenoxidpolyether F) sind OH-terminierte Polyesterether, die durch Umsetzung von aliphatischen $C_2$- bis $C_8$-Dicarbonsäuren oder deren Estern oder Säurechloriden mit Polyethern aus der Gruppe der Polyethylenoxide, Polypropylenoxide oder deren Gemischen oder Mischpolyethern daraus, wobei pro OH-Äquivalent des Polyethers 0,8 bis 0,99 Äquivalente an Carboxyl-Gruppen oder deren Derivaten eingesetzt werden, erhältlich sind und ein mittleres Molgewicht unter 10 000 g/mol, vorzugsweise unter 3 000 g/mol aufweisen und Hydroxylendgruppen besitzen.

Für den Fall, daß die Amine bzw. Aminoalkohole II) A) und II) C) Polyetherketten enthalten, kann auch eine Umsetzung von A) und/oder C) mit den Polyisocyanaten E) direkt zu wasserdispergierbaren Polyisocyanaten führen, so daß der Anteil an Komponente F) gegebenenfalls reduziert werden kann.

Die erfindungsgemäß einzusetzenden Polyisocyanatgemische (I) können auch in Kombination mit externen ionischen oder nichtionischen Emulgatoren eingesetzt werden. Solche Emulgatoren sind beispielsweise in Methoden der organischen Chemie, Houben-Weyl, Bd. XIV/1, Teil 1, Seite 190-208 Thieme-Verlag, Stuttgart (1961) oder in der US-A 3 428 592 oder EP-A 0 013 112 beschrieben. Die Emulgatoren werden in einer die Dispergierbarkeit gewährleistenden Menge eingesetzt.

Falls zunächst Polyisocyanate E) mit Polyalkylenoxidpolyetheralkoholen F) umgesetzt werden, so kann diese Umsetzung in an sich bekannter Weise, unter Einhaltung eines NCO/OH-Äquivalentverhältnisses von mindestens 2:1, im allgemeinen von 4:1 bis ca. 1 000:1 erfolgen, wobei Polyether-modifizierte Polyisocyanate D), mit

- einer mittleren NCO-Funktionalität von 1,8 bis 4,2, vorzugsweise von 2,0 bis 4,0,
- einem Gehalt an (cyclo)aliphatisch gebundenen Isocyanatgruppen von 12,0 bis 21,5 Gew.-% und
- einem Gehalt an innerhalb von Polyetherketten angeordneten Ethylenoxideinheiten (berechnet als $C_2H_4O$, Molekulargewicht = 44 g/mol) von 2 bis 20 Gew.-%, wobei die Polyetherketten im statistischen Mittel 5 bis 70 Ethylenoxideinheiten aufweisen,

erhalten werden.

Die Umsetzung der Komponenten A) und/oder C) mit den Komponenten E) und gegebenenfalls F) und gegebenenfalls G), wird in beliebiger Reihenfolge unter Ausschluß von Feuchtigkeit vorzugsweise ohne Lösungsmittel durchgeführt. Mit steigender Einsatzmenge an Alkohol-Komponente wird eine höhere Viskosität des Endproduktes erreicht, so daß in bestimmten nicht bevorzugten Fällen (wenn die Viskosität z.B. über 100 Pas ansteigt) ein Lösungsmittel zugesetzt werden kann, das vorzugsweise mit Wasser mischbar ist, aber gegenüber dem Polyisocyanat inert ist. Geeignete Lösungsmittel sind: Alkylether-acetate, Glykoldiester, Toluol, Carbonsäureester, Aceton, Methylethylketon, Tetrahydrofuran und Dimethylformamid. Durch die Mitverwendung an sich bekannter Katalysatoren wie Dibutylzinndilaurat, Zinn-(II)-octoat oder 1,4-Diazabicyclo[2,2,2]octan in Mengen von 10 bis 1 000 ppm bezogen auf die Reaktionskomponenten kann die Reaktion beschleunigt werden.

Die Reaktion wird im Temperaturbereich bis 130°C, vorzugsweise im Bereich zwischen 10°C und 100°C, besonders bevorzugt zwischen 20°C und 80°C, durchgeführt. Die Reaktion wird durch Titration des NCO-Gehaltes oder durch Messung der IR-Spektren und Auswertung der Carbonylbande bei ca. 2 100 $cm^{-1}$ verfolgt und ist beendet, wenn der Isocyanatgehalt nicht mehr als 0,1 Gew.-% oberhalb des Wertes liegt, der bei vorgegebener Stöchiometrie bei vollständigem Umsatz erreicht wird. In der Regel sind Reaktionszeiten von weniger als 24 Stunden ausreichend. Bevorzugt ist die lösungsmittelfreie Synthese der erfindungsgemäß einzusetzenden Polyisocyanate.

In einer nicht bevorzugten Ausführungsform ist es auch möglich, die erfindungsgemäß einzusetzenden Polyisocyanatgemische durch Mischen von

1) Polyisocyanaten E),

2) Polyisocyanaten, die durch Umsetzung von Polyisocyanaten E) mit den unter I) genannten Aminen, wobei das Äquivalentverhältnis der gegenüber Isocyanaten reaktiven Gruppen von I) zu den eingesetzten NCO-Gruppen der Komponente II) 1:1 bis 1:1000 beträgt, erhalten werden,

und

3) Polyisocyanaten, die durch Umsetzung von Polyisocyanaten E) mit Polyalkylenoxidpolyetheralkoholen F), wobei das Äquivalentverhältnis der gegenüber Isocyanaten reaktiven Gruppen der Komponente III) zu den eingesetzten NCO-Gruppen der Komponente I) 1:1 bis 1:1000 beträgt, erhalten werden,

herzustellen. Dabei sind die Anzahl der Aminäquivalent, der Polyethergehalt, der NCO-Gehalt und die NCO-Funktionalität durch entsprechende Einwaagen vom Fachmann so einzustellen, daß das erhaltene Gemisch die für die Wasserdispergierbarkeit erforderliche Zusammensetzung hat, wobei die bereits genannten Vorzugsbereiche gelten.

Die erfindungsgemäß einzusetzenden wasserdispergierbaren Polyisocyanatgemische (I) sind technisch gut handhabbar und über Monate unter Ausschluß von Feuchtigkeit lagerstabil. Die hydrophobe Gruppen enthaltenden Polyisocyanate sind je nach Gehalt der hydrophoben Gruppen flüssig oder wachsartig.

Zur Durchführung des erfindungsgemäßen Verfahrens werden die wasserdispergierbaren Polyisocyanatgemische (I) vorzugsweise ohne organische Lösungsmittel eingesetzt. Sie sind gegebenenfalls unter Zusatz von Säuren und/oder bei Temperaturen bis 100°C in Wasser sehr leicht zu emulgieren. Der Wirkstoffgehalt der Emulsion kann bis zu 70 Gew.-% betragen. Es ist aber vorteilhafter, Emulsionen mit einem Wirkstoffgehalt von 1 bis 50 Gew.-% herzustellen, die dann vor der Dosierstelle gegebenenfalls weiter verdünnt werden können. Zur Emulgierung eignen sich die in der Technik üblichen Mischaggregate (Rührer, Mischer mit Rotor-Stator-Prinzip und z.B. Hochdruckemulgiermaschinen). Die bevorzugten Polyisocyanate sind selbstemulgierend, d.h. sie lassen sich nach Zugabe zur Wasserphase auch ohne Einwirkung hoher Scherkräfte leicht emulgieren. In der Regel reicht ein Statischer Mischer aus. Die erhaltenen Emulsionen besitzen eine bestimmte Verarbeitungszeit, die von der Struktur der erfindungsgemäß einzusetzenden Polyisocyanate, insbesondere von deren Gehalt an basischen N-Atomen abhängt. Die Verarbeitungszeit einer solchen wäßrigen Emulsion beträgt in der Regel bis zu etwa 24 Stunden. Die Verarbeitungszeit ist als die Zeit definiert, in der das Optimum der Trocken- und Naßfestwirkung bzw. der Leimungswirkung erreicht wird.

Zur Erleichterung der Einarbeitung in die wäßrige Phase kann es zweckmäßig sein, das erfindungsgemäß einzusetzende wasserdispergierbare Polyisocyanatgemisch in einem gegenüber Isocyanatgruppen inerten Lösungsmittel gelöst einzusetzen. Geeignete Lösungsmittel sind beispielsweise Essigsäureethylester, Ethylenglykol-diacetat, Propylenglykol-Diacetat, 2-Butanon, 1-Methoxypropyl-2-acetat, Toluol oder deren Gemische. Der Anteil der Lösungsmittels in der Lösung des Polyisocyanats sollte höchstens 80 Gew.-%, vorzugsweise höchstens 50 Gew.-% betragen. Besonders bevorzugt ist jedoch die erfindungsgemäße Verwendung lösungsmittelfreier, wasserdispergierbarer Polyisocyanatgemische.

Die für das erfindungsgemäße Verfahren geeigneten cellulosehaltigen Materialien sind z.B. Papier oder papierähnliche Materialien wie Pappe oder Karton. Die Ausrüstung erfolgt in an sich bekannter Weise.

Die für die Naßfest- und Trockenfestausrüstung bevorzugten Polyisocyanatgemische (I) besitzen eine NCO-Funktionalität größer 2 und enthalten nur einen geringen Anteil von vorzugsweise 0 bis 100 Milliäquivalenten pro 100 g Polyisocyanatgemisch (I) an hydrophoben Resten. Die für die Herstellung geleimter Papiere bevorzugten Polyisocyanatgemische (I) enthalten gegebenenfalls einen höheren Anteil von vorzugsweise 100 bis 250 Milliäquivalenten pro 100 g Polyisocyanatgemisch (I) an hydrophoben Resten und können auch eine NCO-Funktionalität unter 2 besitzen.

Polyisocyanatgemische (I), die tertiäre Amino- und/oder durch deren Protonierung und/oder Quaternierung erhaltenen Ammoniumgruppen enthalten und nur einen sehr geringen Anteil von vorzugsweise < 10 Gew.-% an Polyethergruppen und keine hydrophobe Gruppen auf Basis der Komponente G) enthalten, sind vorzugsweise sowohl als Naßfest-, Trockenfest- und Leimungsmittel geeignet.

Zur Durchführung des erfindungsgemäßen Verfahrens zur Trocken- und Naßfestausrüstung werden die wasserdispergierbaren Polyisocyanatgemische beispielsweise in der Masse eingesetzt, das heißt, sie werden der cellulosehaltigen Dispersion der Faserrohstoffe direkt zugesetzt. Dabei geht man so vor, daß man das Polyisocyanatgemisch bei einer Temperatur von 20 bis 80°C in Wasser emulgiert und die dabei erhaltene Emulsion zu einer Suspension des Faserrohstoffs zugibt oder direkt in der Suspension der Faserstoffe dispergiert und aus dieser Suspension durch Entwässerung das Papier bildet, das anschließend getrocknet wird. Zur Emulgierung des Polyisocyanatgemischs ist es zweckmäßig, die 1- bis 4fache Menge an Wasser vorzulegen. Auch höhere Wassermengen sind möglich.

Beim Einsatz in der Oberfläche wird ein fertiges Rohpapier mit einer Emulsion des erfindungsgemäß einzusetzenden Polyisocyanatgemischs in Wasser behandelt und anschließend getrocknet. Der Einsatz in der Leimpresse ist möglich. Dabei wird das in Wasser, wie bereits beschrieben, emulgierte Polyisocyanatgemisch auf die fertige Papierbahn übertragen. Der Trocken- und Naßfesteffekt wird bereits sofort nach der Trocknung erzielt. Der durch Oberflächenbehandlung erzielbare Naßfesteffekt übersteigt das Niveau, das mit den bisher bekannten Naßfestmitteln bei gleicher Dosierung an Wirksubstanz erreichbar ist, wesentlich.

Zur Erzielung des gewünschten Effekts ist es besonders bevorzugt, die wäßrige Emulsion der erfindungsgemäß einzusetzenden Polyisocyanatgemische innerhalb von 60 Minuten, vorzugsweise innerhalb von 15 Minuten zum Faserstoff zu dosieren. Um den optimalen Naßfesteffekt unter Praxisbedingungen zu erzielen, ist eine Dosierung des Polyisocyanats z.B. kurz vor dem Stoffauflauf der Papiermaschine besonders empfehlenswert Zur Prüfung wird man im allgemeinen im Labor Papierblätter mit einem Flächengewicht von 50 bis 100 $m^2/g$ bilden.

In Wasser hydrolysieren die NCO-Gruppen der erfindungsgemäß einzusetzenden Polyisocyanatgemische langsam unter $CO_2$-Entwicklung zu den entsprechenden Aminen, die mit noch vorhandenen NCO-Gruppen teilweise zu Harnstoff-Gruppen reagieren. Vorteilhafterweise treten jedoch keine Ausfällungen auf.

Gemäß dem erfindungsgemäßen Verfahren können die Produkte im pH-Bereich zwischen 4 und 10, vorzugsweise zwischen 5,5 und 9 in der Masse zum Faserstoff dosiert werden. Besonders bevorzugt ist die Anwendung im neutralen pH-Bereich (pH 6 bis 7,5).

In diesem pH-Bereich liegt ein Teil der tertiären Aminogruppen in protonierter Form vor. Es ist auch möglich, die Dispergierung unter Zusatz von Säure durchzuführen. Eine vom pH-Wert unabhängige kationische Ladung wird dann erhalten, wenn die durch Quaternierung der tertiären Aminogruppen erhaltenen Polyisocyanate eingesetzt werden. Eine Quaternierung ist aber für die meisten Anwendungen nicht erforderlich.

Die Einsatzmengen an erfindungsgemäß einzusetzendem Polyisocyanatgemisch (I) richten sich nach dem angestrebten Effekt. In der Regel sind Einsatzmengen von 0,001 bis 50 Gew.-%, vorzugsweise 0,1 bis 10 Gew.-%, besonders bevorzugt 0,1 bis 2,0 Gew.-%, Wirkstoff, bezogen auf trockenen Faserrohstoff ausreichend. Die Dosierung an Wirksubstanz, bezogen auf Faserrohstoff, entspricht der von bekannten Naßfestmitteln des Polyamidamin-Epichlorhydrin-Typs. Die erfindungsgemäß einzusetzenden Polyisocyanatgemische ergeben gebrauchsfertige Papiere mit guter Naßfestigkeit sofort ab Maschine. Durch Lagerung des fertigen Papiers und/oder eine Nachkondensation kann eine Verstärkung der Naßfestwirkung erreicht werden. Generell ist aber bereits ab Maschine ein höheres Naßfestniveau erreichbar als bei konventionellen Naßfestmitteln. Auch die Trockenfestigkeit ist gegenüber konventionellen Naßfestmitteln verbessert

Das erfindungsgemäße Verfahren wird unter den in der Papierindustrie üblichen Verarbeitungstemperaturen durchgeführt. Die Verarbeitungsdauer ist dabei von der Temperatur abhängig. Im Temperaturbereich von 20 bis 25°C ist die Verarbeitungszeit relativ lang. Die Naßfestwirkung erreicht nach 6stündiger Lagerung der wäßrigen Emulsion noch ca. 70 % des Wertes bei sofortiger Anwendung der Emulsion. Bei höherer Temperatur, z.B. bei 50°C, ist eine Verarbeitung innerhalb von 6 Stunden zu empfehlen. Die maximale Naßfestwirkung ist dagegen überraschenderweise kaum von der Kontaktzeit mit der Cellulose abhängig. Papiere, die sofort und nach einer Kontaktzeit von 2 Stunden nach Zusatz des wasserdispergierbaren Polyisocyanatgemischs zum Papierfaserstoff gebildet wurden, zeigen jeweils das gleiche Naßfestniveau.

Durch geeignete Wahl der Ausgangskomponenten kann das Festigkeitsniveau des Papiers in der gewünschten Weise eingestellt werden. Das erfindungsgemäße Verfahren eignet sich nicht nur zur Herstellung von trockenfesten und wasserfesten Papieren, sondern auch zur Herstellung von öl- und benzinbeständigen Papieren.

Die erfindungsgemäß einzusetzenden wasserdispergierbaren Polyisocyanatgemische (I) sind in Kombination mit anderen kationischen Hilfsmitteln, wie Retentionsmitteln, Fixierhilfsmitteln, Trockenfestmitteln und Naßfestmitteln, einsetzbar. Insbesondere durch Zusatz von handelsüblichen Retentionsmitteln vom Typ der kationischen Polykondensate und Polymerisate, z.B. der Polyamine, der Polyethylenimine, der Polyamidamine und der Polyacrylamide sowie der Dual-Systeme, bestehend aus kationischen oder kationischen und anionischen und gegebenenfalls partikulären Komponenten wie Kieselsolen etc., kann die Fixierung von Füllstoffen noch verstärkt werden. Dies ist insbesondere dann von Interesse, wenn an eine Anwendung im Laminatpapier-Bereich gedacht ist. Bevorzugte Retentionsmittel im Sinne der Erfindung sind kationische Polykondensate aus Polyaminen, vorzugsweise N-Methyl-bis(3-aminopropyl)amin, und Alkylendihalogeniden, vorzugsweise Dichlorethan. Es sei jedoch hervorgehoben, daß der gewünschte Naßfesteffekt auch ohne den Zusatz von besonderen Fixiermitteln zu erzielen ist. Die Festigkeit des Papiers kann insbesondere durch Kombination mit Polysacchariden wie Hydroxyethylcellulose, Carboxymethylcellulose, Stärke, Galactomannanen oder deren kationischen Derivaten erhöht werden.

Selbstverständlich können die erfindungsgemäß einzusetzenden Polyisocyanatgemische gegebenenfalls mit den obengenannten kationischen Hilfsmitteln gemeinsam, d.h. gleichzeitig oder nacheinander, eingesetzt werden. Da viele der Hilfsmittel jedoch organisch gebundenes Halogen enthalten, ist eine Kombination mit AOX-freien und/oder AOX-armen Hilfsmitteln besonders bevorzugt, da die chlorfreie Papierherstellung vorrangiges Ziel ist.

Die erfindungsgemäß einzusetzenden Polyisocyanatgemische (I) sind mit üblichen optischen Aufhellern gut verträglich. Die erfindungsgemäß einzusetzenden Produkte führen nicht zur Weißgraderniedrigung und beeinflussen die Saugfähigkeit des Papiers nicht Außerdem läßt sich für die Anwendung im Hygiene-Papierbereich ein weicher Griff des Papiers erzeugen.

Weiterhin bewirken die Polykondensate eine Verstärkung der Leimungswirkung von Masseleimungsmitteln wie Reaktivleimungsmitteln, beispielsweise Alkylketendimer, Alkenylbernsteinsäureanhydrid, Dehydroabietylisocyanat.

Das erfindungsgemäße Verfahren führt zu keiner AOX-Belastung von Papierfabrikationsabwässem. Durch

den erfindungsgemäßen Einsatz der wasserdispergierbaren Polyisocyanatgemische sind die CSB-Werte (CSB = chemischer Sauerstoffbedarf) im Siebwasser der Papiermaschine wesentlich niedriger als bei nichtionischen Produkten. Im Vergleich zu Verfahren, die AOX-arme Produkte einsetzen, werden beim erfindungsgemäßen Verfahren mit wesentlich geringerer Konzentration an ionogenen Gruppen bei entsprechender NCO-Funktionalität die Anforderungen an die Naßfestigkeit erfüllt Die Retention von Füllstoffen wird ebenfalls verbessert.

Im Gegensatz zu Polyamidamin-Epichlorhydrin-Naßfestmitteln ist auch beim Einsatz in der Oberfläche die maximale Naßfestigkeit erreichbar, die auch beim Masseeinsatz erreicht wird.

Ein weiterer Vorteil des erfindungsgemäßen Verfahrens ist, daß die Naßfestigkeit direkt ab Papiermaschine erreicht wird. Im Gegensatz zum Stand der Technik ist ein Nachreifen des Papiers oder eine Nachkondensation - wie z.B. bei Polyamidamin-Epichlorhydrin-Harzen üblich - nicht erforderlich.

Zur Durchführung des erfindungsgemäßen Verfahrens zur Herstellung geleimter Papiere werden die wasserdispergierbaren Polyisocyanatgemische (I) beispielsweise in der Masse oder in der Oberfläche eingesetzt Die Applikationsform entspricht damit der bei der Naßfest- und Trockenfestausrüstung beschriebenen Verfahrensweise. Man erhält eine gute Sofortleimung direkt nach Blattbildung, die sich durch eine Nachkondensation noch verstärken läßt, insbesondere ist die Leimungswirkung über die Dosierung gut abstufbar.

In den folgenden Beispielen beziehen sich die Prozentangaben auf Gewichtsprozent, sofern nichts anderes angegeben ist.

**Herstellung der Rohstoffe**

Polyisocyanat (1)

87 g eines durch Trimerisierung eines Teils der Isocyanatgruppen von 1,6-Düsocyanatohexan hergestellten, Isocyanuratgruppen aufweisenden Polyisocyanats, das im wesentlichen aus Tris(6-isocyanatohexyl)-isocyanurat und dessen höheren Homologen besteht und einen NCO-Gehalt von 21,4 %, einen Gehalt an monomerem 1,6-Diisocyanatohexan <0,3 % und eine Viskosität von 3 000 mPas (23°C) aufweist (NCO-Funktionalität ca. 4,0), wird mit 13 g eines auf 2-(2-Methoxyethoxy)ethanol gestarteten Polyethers auf Basis von Ethylenoxid mit einem Zahlenmittel des Molgewichts von 350 g/mol und einer Hydroxylzahl von 160 mg KOH/g umgesetzt.

| | |
|---|---|
| NCO-Gehalt: | 17,20 % |
| Viskosität(23°C): | 3 200 mPas |
| NCO-Funktionalität: | ca. 3,5. |

Polyisocyanat (2)

150 g eines durch Trimerisierung eines Teils der Isocyanatgruppen von 1,6-Diisocyanatohexan hergestellten, Isocyanuratgruppen aufweisenden Polyisocyanats, das im wesentlichen aus Tris(6-isocyanatohexyl)-isocyanurat und dessen höheren Homologen besteht und einen NCO-Gehalt von 21,4 %, einen Gehalt an monomerem 1,6-Diisocyanatohexan <0,3 % und eine Viskosität von 3 000 mPas (23°C) aufweist (NCO-Funktionalität ca. 4), wird mit 35,4 g eines $\alpha,\omega$-Dihydroxy-poly-(oxyethylen)s mit einem Zahlenmittel des Molgewichts von 400 g/mol und einer Hydroxylzahl von 280 mg KOH/g umgesetzt

| | |
|---|---|
| NCO-Gehalt: | 13,3 % |
| NCO-Funktionalität: | ca. 3,0. |

Polyisocyanat (3)

201,9 g eines Gemisches aus dimerem und trimerem 1,6-Diisocyanatohexan, welches im wesentlichen aus einem Gemisch von Bis(6-isocyanatohexyl)-uretdion und Tris(6-isocyanatohexyl)-isocyanurat besteht (Viskosität (23°C): 150 mPas. NCO-Gehalt: 21,6 %, NCO-Funktionalität: ca. 2,3 bis 2,5), wird mit 17,7 g eines $\alpha,\omega$-Dihydroxy-poly(oxyethylen)s mit einem Zahlenmittel des Molgewichts von 400 g/mol und einer Hydroxylzahl von 280 mg KOH/g

umgesetzt.

| | |
|---|---|
| NCO-Gehalt: | 16,6 % |
| NCO-Funktionalität: | ca. 2,3. |

Polyisocyanat (4)

90 g eines Gemisches aus dimerem und trimerem 1,6-Diisocyanatohexan, welches im wesentlichen aus einem Gemisch von Bis(6-isocyanatohexyl)-uretdion und Tris(6-isocyanatohexyl)-isocyanurat besteht (Viskosität (23°C): 150 mPas. NCO-Gehalt: 21,6 %, NCO-Funktionalität: ca. 2,3 bis 2,5), wird mit 10 g des zu Herstellung von Polyisocyanat (1) eingesetzten Polyethers umgesetzt.

| | |
|---|---|
| NCO-Gehalt: | 18,6 % |
| Viskosität (23°C): | 540 mPas |
| NCO-Funktionalität: | ca. 2,2. |

Polyisocyanat (5)

85 g eines im wesentlichen aus Tris(6-isocyanatohexyl)-isocyanurat bestehenden Polyisocyanats mit einem NCO-Gehalt von 22,5%, und einer Viskosität von 800 mPas wird mit 15 g des zur Herstellung von Polyisocyanat (1) eingesetzten Polyethers umgesetzt.

| | |
|---|---|
| NCO-Gehalt: | 16,9 % |
| Viskosität (23°C): | 1 560 mPas |
| NCO-Funktionalität: | ca. 3,2. |

Polyisocyanat (6)

87 g eines Mischdimerisates aus 80 % 1,6-diisocyanatohexan und 20 % 1-Isocyanato-3,3,5-trimethyl-5-isocyanatomethyl-cyclohexan werden mit 13 g des zur Herstellung von Polyisocyanat (1) eingesetzten Polyethers umgesetzt

| | |
|---|---|
| NCO-Gehalt: | 15,6 % |
| Viskosität (23°C): | 950 mPas |
| NCO-Funktionalität: | ca. 2,2. |

Polyisocyanat (7)

87 g eines Mischdimerisates aus 65 % 1,6-Diisocyanatohexan und 35 % 1-Isocyanato-3,3,5-trimethyl-5-isocyanatomethyl-cyclohexan werden mit 13 g des zur Herstellung von Polyisocyanat (1) eingesetzten Polyethers umgesetzt.

| | |
|---|---|
| NCO-Gehalt: | 14,4 % |
| Viskosität (23°C): | 5 900 mPas |
| NCO-Funktionalität: | ca. 2,2. |

Polyisocyanat (8)

83 g eines durch Trimerisierung eines Teils der Isocyanatgruppen von 1,6-Diisocyanatohexan hergestellten, Isocyanuratgruppen aufweisenden Polyisocyanats, das im wesentlichen aus Tris(6-isocyanatohexyl)-isocyanurat und dessen höheren Homologen besteht und einen NCO-Gehalt von 21,4 %, einen Gehalt an monomerem 1,6-Diisocyanatohexan <0,3 % und eine Viskosität von 3 000 mPas (23°C) aufweist (NCO-Funktionalität ca. 4,0), werden mit 17 g eines auf 2-(2-Methoxyethoxy)ethanol gestarteten Polyethers auf Basis von Ethylenoxid mit einem Zahlenmittel des Molgewichts von 350 g/mol und einer Hydroxylzahl von 160 mg KOH/g umgesetzt.

| | |
|---|---|
| NCO-Gehalt: | 14,9 % |
| Viskosität (23°C): | 5 800 mPas |
| NCO-Funktionalität: | ca. 3,2. |

Polyisocyanat (9)

90 g eines durch Trimerisierung eines Teils der Isocyanatgruppen von 1,6-Diisocyanatohexan hergestellten, Isocyanuratgruppen aufweisenden Polyisocyanats, das im wesentlichen aus Tris(6-isocyanatohexyl)-isocyanurat und dessen höheren Homologen besteht und einen NCO-Gehalt von 21,4 %, einen Gehalt an monomerem 1,6-Diisocyanatohexan <0,3 % und eine Viskosität von 3 000 mPas (23°C) aufweist (NCO-Funktionalität ca. 4,0), werden mit 10 g eines auf Trimethylolpropan gestarteten Polyethers auf Basis von Ethylenoxid/Propylenoxid im Gewichtsverhältnis 85/25 mit einem Zahlenmittel des Molgewichts von ca. 1 180 g/mol, einer Hydroxylzahl von 95±7 mg KOH/g, einer mittleren OH-Funktionalität von 2 (Viskosität (25°C) = 250 mPas) umgesetzt.

| | |
|---|---|
| NCO-Gehalt: | 18,2 % |
| Viskosität (23°C): | 7 524 mPas |
| NCO-Funktionalität: | ca. 3,7. |

Polyisocyanat (10)

Das Polyisocyanat ist identisch mit dem zur Herstellung von Polyisocyanat (1) eingesetzten Trimerisat von 1,6-Diisocyanatohexan.

**Herstellung der wasserdispergierbaren Polyisocyanatgemische**

Beispiel 1

12 g 1,2-Bis(dimethylamino)-2-hydroxypropan (0,082 val OH) werden unter Rühren bei 30°C innerhalb von 30 Minuten zu 100 g Polyisocyanat (1) (0,41 val NCO) zugetropft. Dem Polyisocyanat wurden zu Beginn der Reaktion 0,5 Gew.-% Dibutyl-Zinn(II)-dilaurat zugesetzt Man erwärmt auf 40°C und hält 12 Stunden bei dieser Temperatur. Nach dem Abkühlen erhält man ein klares, farbloses Öl, das sich in Wasser durch leichtes Umrühren mit einem Spatel dispergieren läßt. Das Produkt besitzt folgende Eigenschaften:

| | |
|---|---|
| NCO-Gehalt: | 11,6 % |
| Viskosität (23°C): | ca. 70 000 mPas |
| NCO-Funktionalität: | ca. 2,8. |

Beispiele 2 bis 24

Die Beispiele 2 bis 24 wurden in Anlehnung an Beispiel 1 durchgerührt. Die experimentellen Bedingungen sind in der folgenden Tabelle 1 zusammengefaßt.

Definition der Abkürzungen:

BDMAHP= 1,3-Bis(dimethylamino)-2-hydroxypropan
DMAEHE= 1-(2-Dimethylamino-ethoxy)-2-hydroxyethan
DBAHE = Dibutylamino-hydroxyethan
DEAHE = Diethylamino-hydroxyethan (= Diethylaminoethanol)
MDEA = N-Methyl-diethanolamin
TEA6EO = Triethanolamin + 6 mol EO
PEO350 = Polyethylenglykolmonomethylether (M = 350 g/mol)
TMAHP = 1-Trimethylammonium-3-hydroxypropan Methylsulfat
Ads400 = Polyesteretherdiol aus 1,05 mol Polyethylenglykol 400 und 1,00 mol Adipinsäure
DMAAP = 1-Dimethylamino-3-amino-propan

Tabelle 1

| Beispiel Nr. | Amin-Typ (I) | Isocyanat Typ | akt. H[1)] : NCO [val/val] | Lösm. | Einwaage Isocyanat [g] | Einsatz NCO [val] | Einwaage Amin (I) [g] | akt. H[1)] Amin [val] | Polyether Typ | Einwaage Polyether [g] | akt. H[1)] Polyether [val] | NCO n.Rkt. exp. [%] | NCO-Funktionalität ber. | EO-Gehalt [%] | Gehalt tert-N [mVal/100g] |
|---|---|---|---|---|---|---|---|---|---|---|---|---|---|---|---|
| 1 | BDMAHP | (1) | 0,200 | ohne | 100 | 0,410 | 12,0 | 0,082 | - | - | - | 11,6 | 2,8 | 11,6 | 146,8 |
| 2 | BDMAHP | (1) | 0,100 | ohne | 100 | 0,410 | 6,0 | 0,041 | - | - | - | 2) | 3,1 | 12,3 | 77,5 |
| 3 Vergleichsbeispiel | BDMAHP | (1) | 0,400 | ohne | 81,8 | 0,335 | 19,6 | 0,134 | - | - | - | 2) | 2,1 | 10,5 | 265,1 |
| 4 | DBAHE | (1) | 0,200 | ohne | 150 | 0,614 | 21,3 | 0,123 | - | - | - | 11,7 | 2,8 | 11,4 | 71,8 |
| 5 | DEAHE | (1) | 0,200 | ohne | 300 | 1,229 | 28,8 | 0,246 | - | - | - | 12,6 | 2,8 | 11,9 | 74,8 |
| 6 | DMAEHE | (1) | 0,200 | ohne | 150 | 0,614 | 16,4 | 0,123 | - | - | - | 12,1 | 2,8 | 11,7 | 73,9 |
| 7 | MDEA | (1) | 0,200 | ohne | 150 | 0,614 | 7,3 | 0,123 | - | - | - | 13,0 | 2,8 | 12,4 | 39,1 |
| 8 | DEAHE | (2) | 0,065 | Aceton | 185,3 | 0,587 | 4,4 | 0,038 | - | - | - | 8,3(12,2)* | 2,8 | 18,7 | 20,0 |
| 9 | DBAHE | (3) | 0,143 | ohne | 219,6 | 0,859 | 21,3 | 0,123 | - | - | - | 15,0 | 2,0 | 7,3 | 51,1 |
| 10 | DBAHE | (4) | 0,200 | ohne | 100 | 0,443 | 15,2 | 0,088 | - | - | - | 12,5 | 1,8 | 8,7 | 76,4 |
| 11 | DBAHE | (5) | 0,200 | ohne | 100 | 0,402 | 13,8 | 0,080 | - | - | - | 13,2 | 2,6 | 13,2 | 70,3 |
| 12 | DEAHE | (1) | 0,043 | ohne | 98 | 0,401 | 2,0 | 0,017 | - | - | - | 17,1 | 3,4 | 12,7 | 17,1 |
| 13 | DMAAP | (1) | 0,200 | Aceton | 100 | 0,410 | 8,36 | 0,082 | - | - | - | 6,8 | 2,8 | 12,0 | 75,7 |
| 14 | DEAHE | (1) | 0,110 | ohne | 95 | 0,389 | 5,0 | 0,043 | - | - | - | 11,8 | 3,1 | 12,4 | 42,7 |
| 15 | TEA6EO | (1) | 0,100 | Aceton | 100 | 0,410 | 5,6 | 0,041 | - | - | - | 9,1(14,3)* | 3,1 | 12,3 | 12,9 |
| 16 | DEAHE | (8) | 0,024 | ohne | 99 | 0,355 | 1,0 | 0,0086 | - | - | - | 14,4 | 3,1 | 16,8 | 8,6 |
| 17 | BDMAHP | (8) | 0,024 | ohne | 99 | 0,355 | 1,25 | 0,0086 | - | - | - | 13,9 | 3,1 | 16,8 | 8,5 |
| 18 | DEAHE | (1) | 0,054 | ohne | 89 | 0,364 | 1,00 | 0,0086 | Ads400 | 10,0 | 0,011 | 14,0 | 3,2 | 18,07 | 8,6 |
| 19 | DEAHE | (9) | 0,020 | ohne | 99 | 0,429 | 1,00 | 0,0086 | - | - | - | 17,6 | 3,6 | 9,90 | 8,6 |

Tabelle 1 (Fortsetzung)

| Beispiel Nr. | Amin-Typ (I) | Isocyanat-Typ | akt. H[1] : NCO [val/val] | Lösm. | Einwaage NCO [g] | Einsatz NCO [val] | Einwaage Amin (I) [g] | akt. H[1] Amin [val] | Polyether Typ | Einwaage Polyether [g] | akt.H[1] Polyether [val] | NCO n.Rkt. exp. [%] | NCO-Funktionalität ber. | EO-Gehalt [%] | Gehalt tert. N [mVal/100g] |
|---|---|---|---|---|---|---|---|---|---|---|---|---|---|---|---|
| Vergleichsbsp. 20 | TMAHP | (1) | 0,05 | ohne | 97,6 | 0,400 | 4,6 | 0,020 | - | - | - | 15,7 | 3,3 | | 19,6 |
| 21 | DEAHE | (6) | 0,021 | ohne | 109,3 | 0,406 | 1,00 | 0,0085 | - | - | - | 13,5 | 2,1 | 12,88 | 7,7 |
| 22 | DEAHE | (7) | 0,021 | ohne | 118,4 | 0,406 | 1,00 | 0,0085 | - | - | - | 12,8 | 2,1 | 12,90 | 7,1 |
| 23 | DEAHE | (10) | 0,103 | ohne | 86,13 | 0,439 | 1,00 | 0,0085 | PEO350 | 12,87 | 0,0368 | 16,0 | 3,5 | 12,87 | 8,5 |
| 24 | DEAHE | (1) | 0,021 | ohne | 99 | 0,406 | 1,00 | 0,0085 | - | - | - | 17,0 | 3,5 | 12,87 | 8,5 |

* Wert in Klammern berechnet für 100 % Wirksubstanz

1) aktives H bezieht sich auf die im Amin bzw. Polyether vorhandenen gegenüber Isocyanat reaktiven Gruppen

2) nicht bestimmt

## Anwendungsbeispiele

Anwendungsbeispiel I

Eine Mischung aus 80 % gebleichtem Kiefernsulfat-Zellstoff und 20 % gebleichtem Birkensulfat-Zellstoff wird bei einer Stoffdichte von 2,5 % im Holländer auf einen Mahlgrad von 38° Schopper-Riegler gemahlen. Hiervon werden 100 g in ein Becherglas gegeben und mit Wasser auf 1 000 ml verdünnt.

0,3 Gew.-%, 0,6 Gew.-% und 0,9 Gew.-% Wirksubstanz, bezogen auf Faserstoff, der gemäß den Beispielen hergestellten Produkte werden nach vorheriger Dispergierung in Wasser (Emulsionen mit einem Gehalt von 20 Gew.-% Polyisocyanat) zur Zellstoff-Suspension gegeben.

Nach einer Rührzeit von 3 Minuten werden mit den Inhalten der Bechergläser auf einem Blattbildner (Rapid-Köthen-Gerät) Papierblätter mit einem Flächengewicht von ca. 80 $m^2/g$ gebildet. Die Papierblätter werden bei 85°C 8 Minuten im Vakuum bei 20 mm Hg getrocknet und im Trockenschrank noch 10 Minuten bei 110°C nacherhitzt.

Aus jedem Papierblatt werden nach der Klimatisierung 5 Prüfstreifen von 1,5 cm Breite ausgeschnitten und 5 Minuten in destilliertes Wasser eingetaucht Danach werden die nassen Streifen in einer Zugprüfmaschine sofort auf ihre Naßbruchlast geprüft.

Die Prüfergebnisse sind in Tabelle 2 zusammengefaßt.

Tabelle 2

| Naßbruchlasten bei Einsatz in Masse, nach Kondensation bei 110°C (10 Minuten) | | | | | | |
|---|---|---|---|---|---|---|
| Anwendungsbeispiel Nr. | Isocyanat gemäß Bsp. | Feststoff [%] | Viskosität [mPas] | Naßbruchlast [N] bei Wirksubstanz-Einsatz von | | |
| | | | | 0,3% | 0,6% | 0,9% |
| I-1 | 1 | 100 | hochvisk. | 9,6 | 16,0 | 18,9 |
| I-2 | 2 | 100 | 38000 | 3,4 | 5,7 | 7,6 |
| I-3 Vergleichsbsp. | 3 | 100 | hochvisk. | 1,7 | 2,9 | 3,9 |
| I-4 | 4 | 100 | 7450 | 11,7 | 15,6 | 17,9 |
| I-5 | 5 | 100 | 7450 | 5,8 | 9,1 | 10,8 |
| I-6 | 6 | 100 | 11760 | 6,9 | 10,0 | 13,4 |
| I-7 | 7 | 100 | 40760 | 13,1 | 15,4 | 17,8 |
| I-8 | 12 | 100 | 3010 | 15,9 | 23,1 | 25,9 |
| I-9 | 14 | 100 | 6130 | 11,7 | 18,4 | 24,3 |
| I-10 | 19 | 100 | 8850 | 4,5 | 7,0 | 8,9 |
| I-11 Vergleichsbsp. | 20 | 100 | 11230 | 8,0 | 19,4 | 23,5 |
| I-12 | 23 | 100 | 4280 | 11,5 | 14,3 | 17,7 |

Anwendungsbeispiel II

Es wurden Papiere mit einem Flächengewicht von 80 $g/m^2$ ohne Naßfestmittel aus 80 % Nadelholzzellstoff, 20 % Laubholzzellstoff mit einem Mahlgrad von 35°SR bei pH 7 hergestellt. Die Ausrüstung der Papiere erfolgte auf einer Labor-Leimpresse der Firma Mathis, Zürich, Schweiz, Typ HF. Als Flotte wurde eine Lösung oder Emulsion eingesetzt, die 0,3 %, 0,75 % und 1,2 % der wasserdispergierbaren Polyisocyanate enthielt.

Die Naßaufnahme des Papiers betrug 100 %. Die Papiere wurden bei 85°C 8 Minuten getrocknet. Ein Teil der Papiere wurde zusätzlich bei 110°C 10 Minuten kondensiert; zum Vergleich wurde ein bekanntes Polyamidamin-Harz und das nichtionische Polyisocyanat (1) mitgeprüft An den Papierblättern wurde analog Anwendungsbeispiel I die Naßbruchlast gemessen.

Die Ergebnisse zeigen überraschend, daß das nach dem erfindungsgemäßen Verfahren erhaltene Papier unkondensiert bereits eine wesentlich höhere Naßfestigkeit ergibt als bei Verwendung des handelsüblichen Polyamidamin-Harzes und mit Nachkondensation dem Polyamidamin-Harz weit überlegen ist.

Darüber hinaus zeigt das Beispiel den positiven Effekt der erfindungsgemäß einzusetzenden Polyisocyanate gegenüber dem nichtionischen Polyisocyanat (1).

Tabelle 3

| Einsatz in der Oberfläche (Leimpresse) | | | | | | | |
|---|---|---|---|---|---|---|---|
| Beispiel Nr. | Produkt | Naßbruchlast [N] unkondensiert bei Wirkstoffmenge iM Papier | | | Naßbruchlast [N] kondensiert bei Wirkstoffmenge iM Papier | | |
| | | 0,3% | 0,75% | 1,2% | 0,3% | 0,75% | 1,2% |
| II-1 | Polyamidaminharz (gemäß Beispiel 3a der US-PS 48 57 586) | 2,9 | 5,7 | 4,2 | 7,8 | 11,1 | 13,0 |
| II-2 | Polyisocyanat (1) | 5,3 | 5,8 | 7,4 | 14,0 | 15,7 | 21,7 |
| II-3 | gem. Bsp. 12 | 8,2 | 10,9 | 13,6 | 15,8 | 20,0 | 24,0 |
| II-4 | gem. Bsp. 24 | 7,0 | 10,8 | 12,8 | 13,5 | 19,9 | 22,5 |

Anwendungsbeispiel III

Analog zu Anwendungsbeispiel I wurden zunächst Papierblätter unter Einsatz der Naßfestmittel in Masse hergestellt. Die Papiere wurden bei 85°C 8 Minuten getrocknet. Ein Teil der Papiere wurde zusätzlich bei 110°C 10 Minuten kondensiert. Zum Vergleich wurde ein bekanntes Polyamid-Harz und das nichtionische Polyisocyanat (1) mitgeprüft. An den Papierblättern wurde analog Anwendungsbeispiel I die Naßbruchlast gemessen.

Die Ergebnisse zeigen überraschend, daß das nach dem erfindungsgemäßen Verfahren erhaltene Papier auch im unkondensierten Zustand bereits eine wesentlich höhere Naßfestigkeit ergibt als das bei Verwendung des bekannten Polyamidamin-Harzes und des nichtionischen Polyisocyanats (1) erhaltene Papier. Mit Nachkondensation werden die Werte des Polyamidamin-Harzes erreicht. Darüber hinaus ergeben die erfindungsgemäßen Polyisocyanate gegenüber dem nichtionischen Polyisocyanat (1) wesentlich höhere Naßfestwerte auch mit Nachkondensation.

Tabelle 4

| Einsatz in Masse | | | | | | | |
|---|---|---|---|---|---|---|---|
| Beispiel Nr. | Produkt | Naßbruchlast [N] unkondensiert bei Wirkstoff in Papier | | | Naßbruchlast [N] kondensiert bei Wirkstoff in Papier | | |
| | | 0,3% | 0,75% | 1,2% | 0,3% | 0,75% | 1,2% |
| III-1 | Polyamidaminharz (gemäß Beispiel 3a der US-PS 48 57 586) | 4,0 | 8,4 | 10,1 | 9,5 | 14,9 | 17,5 |
| III-2 | Polyisocyanat (1) | 2,6 | 4,2 | 4,7 | 4,0 | 6,5 | 7,3 |
| III-3 | gem. Bsp. 12 | 4,6 | 9,9 | 12,3 | 6,6 | 12,8 | 15,8 |
| III-4 | gem. Bsp. 24 | 6,6 | 10,0 | 12,6 | 9,5 | 13,9 | 18,7 |

Anwendungsbeispiel IV

Analog Anwendungsbeispiel I wurden Papierblätter mit Einsatzmengen von 0,45 % bzw. 0,9 % Wirkstoff, bezogen auf atro Zellstoff gebildet. Gegenüber dem Anwendungsbeispiel I wurden jedoch folgende Änderungen vorgenommen:

a) Das in Wasser emulgierte Polyisocyanat (Konzentration 2 %) wurde erst nach einer bestimmten Verweilzeit zur Zellstoffsuspension gegeben und dann sofort das Papierblatt gebildet.
b) In einer weiteren Serie wurde das Polyisocyanat als wäßrige Emulsion (Konzentration 2 %) sofort zur Zellstoff-Suspension gegeben, wobei die Blattbildung erst nach einer bestimmten Kontaktzeit mit der Zellulose erfolgte.

Tabelle 5:

| Einfluß der Standzeit in Wasser und Einfluß der Kontaktzeit mit Cellulose | | | | | | | | | |
|---|---|---|---|---|---|---|---|---|---|
| Beispiel | Produkt | Naßbruchlast [N] bei Kontaktzeit mit Zellstoff [Minuten] [Serie b)] | | | | Naßbruchlast [N] bei Standzeit in Wasser [Minuten] [Serie a)] | | | |
| | Einsatz: 0,45 % Wirkstoff | 1 | 5 | 15 | 120 | 0 | 60 | 120 | 360 |
| IV-1 | Polyamidamin-Harz*) | 11,3 | 11,7 | 13,6 | 11,7 | 11,7 | 11,9 | 12,2 | 13,2 |
| IV-2 | Polyisocyanat (1) | 3,7 | 5,4 | 6,6 | 5,4 | 5,4 | 5,3 | 5,5 | 4,7 |
| IV-3 | gemäß Beispiel 24 | 11,1 | 10,7 | 11,2 | 10,7 | 10,7 | 11,8 | 11,8 | 7,1 |
| | Einsatz: 0,9 % Wirkstoff | | | | | | | | |
| IV-4 | Polyamidamin-Harz*) | 15,0 | 16,5 | 16,2 | 16,5 | 16,5 | 17,4 | 17,9 | 16,6 |
| IV-5 | Polyisocyanat (1) | 5,3 | 7,0 | 9,5 | 7,0 | 7,0 | 7,6 | 6,9 | 6,8 |
| IV-6 | gemäß Beispiel 24 | 13,1 | 13,8 | 12,5 | 13,8 | 13,8 | 14,8 | 15,5 | 8,5 |

*) gemäß Beispiel 3a der US-PS 4 857 586

Vergleichsbeispiel 25

94,25 Teile eines durch Trimerisierung eines Teils der Isocyanatgruppen von 1 ,6-Diisocyanatohexan hergestellten, Isocyanuratgruppen aufweisenden Polyisocyanats, das im wesentlichen aus Tris(6-isocyanatohexyl)-isocyanurat und dessen höheren Homologen besteht und einen NCO-Gehalt von 21,9 %, einen Gehalt an monomerem 1,6-Diisocyanatohexan <0,3 % und eine Viskosität von 3 000 mPas (23°C) aufweist (NCO-Funktionalität ca. 4,0), wird mit 5,75 Teilen N,N-Diethylaminoethanol (DEAHE) umgesetzt. Die Mischung wird unter Feuchtigkeitsausschluß 6 Stunden bei 60°C gerührt.

| | | | |
|---|---|---|---|
| NCO-Gehalt | 18,66% | EO-Gehalt | 0 Gew. % |
| Viskosität (23°C) | 5310 mPas | tert./quat. N-Gehalt | 49.1 Milliäquivalente pro 100g Polyisocyanant |

<u>Beispiel 26 bis 29</u>

Die Beispiele 26 bis 29 wurden in Anlehnung an Beispiel 25 durchgeführt Die experimentellen Bedingungen für die Beispiele 25 bis 29 sind in der folgenden Tabelle 6 zusammengefaßt

Tabelle 6

| Beisp. Nr. | Lösungsmittel | Isoc. [g] | Isoc. [mol] | DEAHE [g] | DEAHE [mol] | NCO n. Rkt. exp. [%] | NCO Gehalt n. Rkt. ber. [%] | EO-Gehalt [Gew.%] | tert/quat N-Gehalt [mmol N bzw. N+ pro 100g Polyisocyanat] |
|---|---|---|---|---|---|---|---|---|---|
| (Vergleich) 25 | ohne | 94,25 | 0,4914 | 5,75 | 0,0491 | 18,7 | 18,6 | 0 | 49.1 |
| 26 | ohne | 89,13 | 0,4647 | 10,87 | 0,0929 | 15,5 | 15,6 | 0 | 92.9 |
| 27 | ohne | 84,53 | 0,4407 | 15,47 | 0,1332 | 13,9 | 13 | 0 | 133.2 |
| (Vergleich) 28 | ohne | 96,95 | 0,5055 | 3,05 | 0,026 | 20,3 | 20,1 | 0 | 26 |

Tabelle 6 (fortgesetzt)

| Beisp. Nr. | Lösungsmittel | Isoc. [g] | Isoc. [mol] | DEAHE [g] | DEAHE [mol] | NCO n. Rkt. exp. [%] | NCO Gehalt n. Rkt. ber. [%] | EO-Gehalt [Gew-%] | tert./quat N-Gehalt [mmol N bzw. N+ pro 100g Polyisocyanat] |
|---|---|---|---|---|---|---|---|---|---|
| 29 | Aceton | 89,1 | 0,465 | 21,3 | 0,0929 | 6,5 | 14,1*/5,0 | 0 | 92,9 |

*berechnet für 100% Wirksubstanz

**Beispiel 30**

25 Teile des Polyisocyanats aus Beispiel 26 werden mit 2,9 Teilen Dimethylsulfat in 25 Teilen Aceton umgesetzt Es wird 18 Stunden bei Raumtemperatur gerührt.

| | | | |
|---|---|---|---|
| Gehalt der Lösung: | 47 % | EO-Gehalt [Gew.- %] | 0 |
| NCO-Gehalt: | 7,3 % Lösung | | |
| Viskosität (23°C) | 12 330 mPas (100 %) | tert/quat. N Gehalt [mmol N bzw. N+ pro 100g Polyisocyanat] | 83.2 (bezogen auf Festgehalt) |

**Beispiel 31**

85,0 Teile eines durch Trimerisierung eines Teils der Isocyanatgruppen von 1,6-Diisocyanatohexan hergestellten, Isocyanuratgruppen aufweisenden Polyisocyanats, das im wesentlichen aus Tris(6-isocyanatohexyl)-isocyanurat und dessen höheren Homologen besteht und einen NCO-Gehalt von 21,9 %, einen Gehalt an monomerem 1,6-Diisocyanatohexan <0,3 % und eine Viskosität von 3 000 mPas (23°C) aufweist (NCO-Funktionalität ca. 4,0), werden mit 15,0 Teilen N,N-Diethylaminoethanol und 10 Teilen N-Methyl-sterylamin umgesetzt.
Die Mischung wird unter Feuchtigkeitsausschluß 6 Stunden bei 60°C gerührt.

| | | | |
|---|---|---|---|
| NCO-Gehalt: | 11,0 % (ber.: 10,9 %) | EO-Gehalt | 0% |
| Viskosität (23°C): | 22 380 mPas | tert/quat. N Gehalt [mmol N bzw. N+ pro 100g Polyisocyanat] | 116.6 (bezogen auf Festgehalt |

**Vergleichsbeispiel 32**

100 Teile eines gemäß Beispiels 2 der DE-A 3 743 782 durch Reaktion von Tetrakis(trimethylsilyloxymethyl)-methan mit 5-Isocyanatocapronsäurechlorid im Molverhältnis 1:4 erhaltenen estergruppenhaltigen Polyisocyanats mit einem NCO-Gehalt von 23,7 % und einer Viskosität von 252 mPas (23°C) (NCO-Funktionalität 4,0) wird mit 16,5 Teilen N,N-Dimethylaminoethanol umgesetzt. Das Isocyanat wird dazu 6 Stunden bei 60°C unter Feuchtigkeitsausschluß gerührt.

| | | | |
|---|---|---|---|
| NCO-Gehalt:<br>Viskosität (23°C):<br>NCO-Funktionalität: | 14,6 %<br>1 290 mPas<br>ca. 3,0 | EO- Gewalt<br>tert/quat. N Gehalt [mmol N bzw. N+ pro 100g Polyisocyanat] | 0%<br>159.1 (bezogen auf Festgehalt) |

**Vergleichsbeispiel 33**

100 Teile eines gemäß Beispiels 2 der DE-A 3 743 782 durch Reaktion von Tetrakis(trimethylsilyloxymethyl)-methan mit 5-Isocyanatocapronsäurechlorid im Molverhältnis 1:4 erhaltenen estergruppenhaltigen Polyisocyanats mit einem NCO-Gehalt von 23,7 % und einer Viskosität von 252 mPas (23°C) (NCO-Funktionalität 4,0) wird mit 33,0 Teilen N,N-Dimethylaminoethanol umgesetzt. Das Isocyanat wird dazu 6 Stunden bei 60°C unter Feuchtigkeitsausschluß gerührt.

| | | | |
|---|---|---|---|
| NCO-Gehalt:<br>Viskosität (23°C): | 8,4 %<br>4 180 mPas | EO-Gehalt | 0% |
| NCO-Funktionalität: | ca. 2,0 | tert/quat.N Gehalt [mmol N bzw. N+ pro 100g Polyisocyanat] | 278.8 (bezogen auf Festgehalt) |

**Vergliechsbeispiel 34**

78 Teile des Polyisocyanats aus Beispiel 33 werden mit 11,8 Teilen Dimethylsulfat in 89,8 Teilen 1,2-Diacetoxypropan umgesetzt Es wird 18 Stunden bei Raumtemperatur gerührt.

| | | | |
|---|---|---|---|
| Gehalt der Lösung:<br>NCO-Gehalt: | 50 %<br>3,65 % (Lösung) | EO- Gehalt | 0% |
| NCO-Funktionalität: | ca. 2,0 | tert/quat. N Gehalt [mmol N bzw. N+ pro 100g Polyisocyanat] | 242.2 bezogen auf Festgehalt) |

**Anwendungsbeispiel V: Verwendung als Naßfestmittel für Papier**

Eine Mischung aus 80 % gebleichtem Kiefernsulfat-Zellstoff und 20 % gebleichtem Birkensulfat-Zellstoff wird bei einer Stoffdichte von 2,5 % im Holländer auf einen Mahlgrad von 38° Schopper-Riegler gemahlen. Hiervon werden 100 g in ein Becherglas gegeben und mit Wasser auf 1 000 ml verdünnt.

Die vorgegebene Menge der Polyisocyanate (Wirksubstanz bezogen auf Faserstoff) werden nach vorheriger Dispergierung in Wasser bzw. in schwach saurer Lösung (pH 4) (Emulsionen mit einem Gehalt von 10 Gew.-% Polyisocyanat) zur Zellstoff-Suspension gegeben.

Nach einer Rührzeit von 3 Minuten werden mit den Inhalten der Bechergläser auf einem Blattbildner (Rapid-Köthen-Gerät) Papierblätter mit einem Flächengewicht von ca. 80 $m^2$/g gebildet Die Papierblätter werden bei 85°C 8 Minuten im Vakuum bei 20 mm Hg getrocknet und im Trockenschrank noch 10 Minuten bei 110°C nacherhitzt.

Aus jedem Papierblatt werden nach der Klimatisierung 5 Prüfstreifen von 1,5 cm Breite ausgeschnitten und 5 Minuten in destilliertes Wasser eingetaucht. Danach werden die nassen Streifen in einer Zugprüfmaschine sofort auf ihre Naßbruchlast geprüft.

Die Prüfergebnisse sind in Tabelle 7 zusammengefaßt,

Tabelle 7a

| Naßbruchlasten bei Einsatz in Masse, nach Kondensation bei 110°C (10 Minuten) | | | | | |
|---|---|---|---|---|---|
| Beisp. Nr. | Feststoff [%] | Visko. [mPas] | Naßbruchlast [N] bei einem Wirkstoff-Einsatz von | | |
| | | | 0,3% | 0,6% | 0,9% |
| (Vergleich) 25 | 100 | 5310 | 8,6 | 13,1 | 15,7 |
| 26 | 100 | 11800 | 9,9 | 15,3 | 18,2 |
| 27 | 100 | 14530 | 8,4 | 13,6 | 15,9 |
| (Vergleich) 28 | 100 | 4570 | 5,2 | 7,9 | 9,2 |
| 29 | 35,3 | n. best. | 13,6 | 19,6 | 22,7 |
| 30 | 100 | 12330 | 12,8 | 22,1 | 22,6 |
| 31 | 100 | 22380 | 9,3 | 14,0 | 17,1 |

Tabelle 7b

| Naßbruchlasten bei Einsatz in Masse, nach Kondensation bei 110°C (10 Minuten) | | | | | |
|---|---|---|---|---|---|
| Beisp. Nr. | Feststoff [%] | Visko. [mPas] | Naßbruchlast [N] bei einem Wirkstoff-Einsatz von | | |
| | | | 0,4% | 0,8% | 1,2% |
| Vergleich 32 | 100 | 1290 | 14,5 | 22,7 | 24,0 |
| Vergleich 33 | 100 | 4180 | 8,1 | 7,7 | 8,4 |
| Vergleich 34 | 50 | n.best. | 4,5 | 6,7 | 10,1 |

**Anwendungsbeispiel VI: Verwendung als Masseleimungsmittel für Papier**

Einem 0,35 %igen wäßrigen Stoffgemisch aus 50 Teilen gebleichtem Nadelholzzellstoff, 50 Teilen gebleichtem Laubholzzellstoff, das 25 % Calciumcarbonat bezogen auf Faserstoff enthalten, wird unter Rühren die vorgegebene Menge an Wirkstoff Polyisocyanat zugegeben. Das Polyisocyanat wird zuvor in der oben beschriebenen Weise in Wasser emulgiert. Das Stoffsystem hat einen pH-Wert von 7 bis 7,5.

Nach einen kurzen Verweilzeit (10 bis 20 Sekunden) wird auf einem Laborblattbildner ein Papierblatt gebildet Dieses wird zwischen Filzen abgepreßt und danach 10 Minuten bei 90°C im Trockenzylinder getrocknet. Es werden Papierblätter mit einem Flächengewicht von 80 $g/m^2$ erhalten,

Die Wirkung wird mit Hilfe des Cobb-Tests geprüft: Nach DIN 53132 wird die einseitige Wasseraufnahme eines Papiers bei 60 Sekunden Prüfzeit zur Beurteilung der Leimungswirkung herangezogen.

Die Prüfergebnisse sind in Tabelle 8 wiedergegeben.

Tabelle 8

| Einsatz in der Masseleimung | | | | | | | |
|---|---|---|---|---|---|---|---|
| Polyisocyanat gem. Beispiel | $Cobb_{60}$-Wert der Probe bei einem Wirkstoff-Einsatz von | | | | | | |
| | 0,3 % | 0,5 % | 0,6 % | 0,9 % | 1,0 % | 1,2 % | 2,0 % |
| 26 | >80 | | 78,4 | 23,4 | | 24,4 | |

Tabelle 8 (fortgesetzt)

| Einsatz in der Masseleimung | | | | | | | |
|---|---|---|---|---|---|---|---|
| Polyisocyanat gem. Beispiel | $Cobb_{60}$-Wert der Probe bei einem Wirkstoff-Einsatz von | | | | | | |
| | 0,3 % | 0,5 % | 0,6 % | 0,9 % | 1,0 % | 1,2 % | 2,0 % |
| 29 | >80 | | 30,4 | 21,8 | | 20,8 | |
| 30 | >80 | | >80 | 37,0 | | 27,8 | |
| 31 | | >100 | | | 36 | | 21,4 |
| Vergleich 32 | | | 46 | | | | |
| Vergleich 33 | | | 24,5 | | | | |

**Patentansprüche**

**1.** Verfahren zur Herstellung von trockenfest und naßfest ausgerüstetem und/oder geleimtem cellulosehaltigem Material, dadurch gekennzeichnet, daß das cellulosehaltige Material mit einem wasserdispergierbaren Polyisocyanalgemisch (I) mit

α) einem Gehalt an Isocyanatgruppen von 10 bis 700 Mitliäquivalenten pro 100 g Gemisch
β) einer mittleren NCO-Funktionalität von ≥ 1,0.
γ) einem Gehalt an Ethylenoxid-Einheiten von 0 bis 30 Gew.-%, bezogen auf das Gemisch, wobei die Polyethylenoxidkette ein mittleres Molgewicht (Zahlenmittel) von 100 bis 3 500, bevorzugt 100 bis 1000, besonders bevorzugt 100 bis 600 g/mol hat,
δ) einem Gehalt an tertiären Aminogruppen bzw. durch deren Protonierung und/oder Quaternierung erhaltenen Ammoniumgruppen von 50 bis 146.8 Mittiäquivalenten pro 100 g Gemisch und
ε) einem Gehalt an hydrophoben Resten von 0-250 Miltläquivalenten pro 100 g Gemisch behandelt wird. dadurch gekennzeichnet, daß die wasserdispergierbaren Polyisocyanate (I) erhältlich sind durch Umsetzung in beliebiger Reihenfolge von

II)

A) Aminen, die eine gegenüber Isocyanaten reaktive Gruppe enthalten, der Formel

A 1)

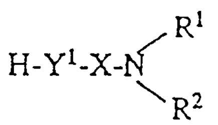 ,

in der

$Y^1$ für -O-, -NH- oder $-NR^3-$ steht, wobei $R^3$ für Methyl oder Ethyl steht,
R' und $R^2$

a) unabhängig voneinander für $C_1$-$C_4$-Alkyl oder $C_3$-$C_6$-Cycloalkyl stehen,
b) für einen Rest der Formel

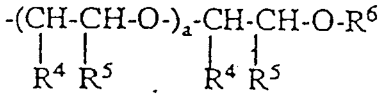

stehen

wobei $R^4$ und $R^5$ unabhängig voneinander für Wasserstoff oder Methyl stehen, mit der Bedingung. daß immer einer der Reste für Wasserstoff steht,

$R^6$ für Methyl oder Ethyl seht und

a Werte von 0 bis 10 annimt oder

c) für einen durch eine oder mehrere tertiäre Aminogruppen und/oder durch deren Protonierung und/oder Quaternierung erhaltenen Ammoniumgruppen substituierten $C_2$-$C_4$-Alkylrest der Formeln

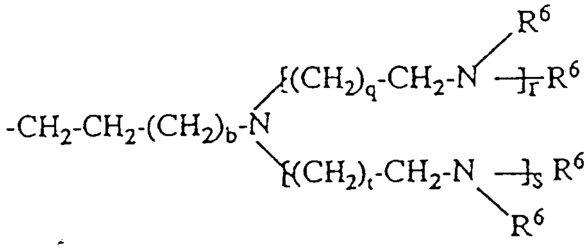

oder

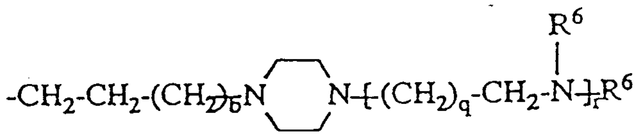

wobei

| | |
|---|---|
| b | Werte von 0 bis 2 annimmt, |
| q und t | unabhängig voneinander Werte von 1 oder 2 annehmen, |
| r und s | unabhängig voneinander Werte von 0 bis 3 annehmen und |
| $R^6$ | die obengenannte Bedeutung hat, |

stehen, oder

d) gemeinsam mit dem N-Atom, an das sie gebunden sind, einen 5- oder 6-gliedrigen Ring der Formel

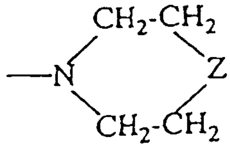

bilden, wobei

Z für >O oder

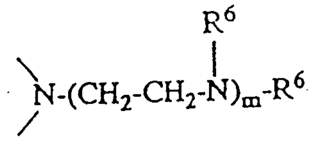

oder

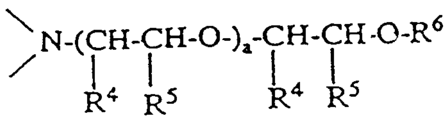

steht, wobei

m Werte von 0 bis 2 annimmt und
a. $R^4$, $R^5$ und $R^6$ die obengenannte Bedeutung haben,

X für $C_2$- bis $C_{10}$-Alkylen, $C_5$ bis $C_{10}$-Cycloalkylen, einen Rest der Formel

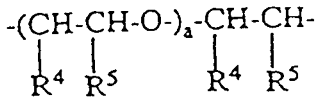

wobei $R^4$, $R^5$ und a die obengenannte Bedeutung haben,

oder einen Rest der Formel

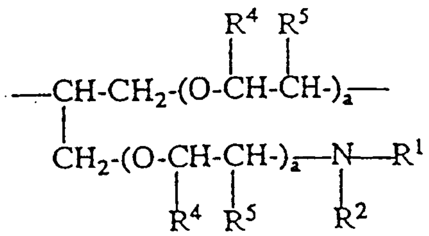

in der

a, $R^4$, $R^5$, $R^1$ und $R^2$ die obengenannte Bedeutung haben,

oder

A 2) der Formel

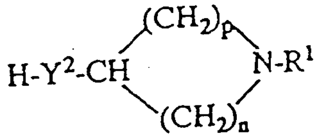

worin

$Y^2$ für -O-, -NH- oder $NR^3$- steht, wobei $R^3$ die obengenannte Bedeutung hat,
n und p unabhängig voneinander Werte von 1 oder 2 annehmen
und $R^1$ die obengenannte Bedeutung hat

oder
A 3) der Formel

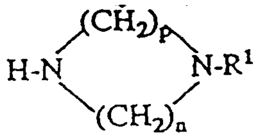

wobei n, p und $R^1$ die obengenannte Bedeutung haben
oder
A 4) der Formel

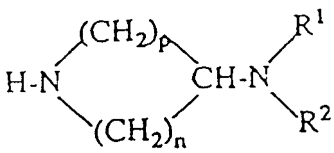

worin

n, p, $R^1$ und $R^2$ die obengenannte Bedeutung haben,

oder
C) den durch Umsetzung von A) durch Protonierung und/oder Quaternierung erhaltenen Ammoniumgruppen enthaltenden gegenüber Isocyanaten reaktiven Verbindungen
oder
beliebigen Gemischen aus A) und C)
mit

III) Polisocyanaten E), wobei

es sich bei den Polyisocyanaten E) um im wesentlichen aus trimerem 1,6-Diisocyanatohexan oder 1-Isocyanato-3,3,5-trimethyl-5-isocyanatomethyl-cyclohexan und gegebenenfalls dimerem 1.6-Diisocyanatohexan oder 1-Isocyanato-3.3,5-trimethyl-5-isocyanatomethyl-cyclohexan und den entsprechenden höheren Homologen bestehenden Isocyanuratgruppen und gegebenenfalls Uretdiongruppen aufweisenden Polyisocyanatgemischen mit einem NCO-Gehalt von 19 bis 24 Gew.-%. handelt, mit

- einer mittleren NCO-Funktionalität von 2,0 bis 8,0, vorzugsweise 2.0 bis 6,0, besonders bevorzugt von 2,1 bis 4,4 und insbesondere von 2,3 bis 4,3, und
- einem Gehalt an Isocyanatgruppen von 10 bis 50 Gew.-%, vorzugsweise 19 bis 24 Gew.-%, bezogen auf das Gemisch III,

gegebenenfalls mit

IV) $C_4$-$C_{30}$-Kohlenwasserstoffen G) die geradkettig oder verzweigt, gesättigt oder ein- oder mehrfach ungesättigt sind und mindestens eine gegenüber Isocyanaten reaktive Gruppe aufweisen, und gegebenenfalls mit
V) ein- oder mehrwertigen, im statistischen Mittel 5,0 bis 70 Ethylenoxideinheiten aufweisenden, gegebenenfalls Estergruppen enthaltenden Polyalkylenoxidpolyetheralkoholen F).

2. Verfahren zur Herstellung von trockenfest und naßfest ausgerüstetem und/oder geleimtem cellulosehaltigem Material, dadurch gekennzeichnet, daß das cellulosehaltige Material mit einem wasserdispergierbaren Polyisocyanatgemisch (I) mit

α) einem Gehalt an Isocyanatgruppen von 47 bis 595 Milliäquivalente, bezogen auf 100 g Gemisch
β) einer mittleren NCO-Funktionalität von 1,5 bis 4,2,
γ) einem Gehalt an Ethylenoxid-Einheiten von 7 bis 30 Gew.-%, bezogen auf das Gemisch, wobei die Polyethylenoxidkette ein mittleres Molgewicht (Zahlenmittel) von 100 bis 3500, bevorzugt 100 bis 1 000 besonders bevorzugt 100 bis 600 g/mol hat,
und
δ) einem Gehalt an tertiären Aminogruppen bzw. durch deren Protonierung und/oder Quatemierung erhaltenen Arnmoniumgruppen von 1 bis 146.8 Milliäqivalenten pro 100 g Gemisch behandeltwind
dadurch gekennzeichnet, daß die wasserdispergierbaren Polyisocyanatgemische (I), erhältlich sind durch Umsetzung in beliebiger Reihenfolge von

II) (cyclo)aliphatischen, gegebenenfalls Ether-, Ester- oder Amidgruppen enthaltenden Aminen, die mindestens eine gegenüber Isocyanaten reaktive Gruppe enthalten und die mindestens eine tertiäre Aminogruppe und/oder Ammoniumgruppe enthalten, oder deren Gemischen
mit
III) Polisocyanaten E), wobei

es sich bei den , Polyisocyanaten E) um im wesentlichen aus trimerem 1,6-Diisocyanatohexan oder 1-Isocyanato-33.5-trimethyl-5-isocyanatomethyl-cyclohexan und gegebenenfalls dimerem 1.6-Diisocyanabohexan oder 1-Isocyanato-3.3.5-trimethyl-5-isocyanatomethyl-cyclohexan und den entsprechenden höheren Homologen bestehenden Isocyanuratgruppen und gegebenenfalls Uretdiongruppen aufweisenden Polyisocyanatgemischen mit einem NCO-Gehalt von 19 bis 24 Gew.-%. handelt,
und gegebenenfalls mit
IV) $C_4$-$C_{30}$-Kohlenwasserstoffen G), die geradkettig oder verzweigt, gesättigt oder ein- oder mehrfach ungesättigt sind mindestens eine gegenüber Isocyanaten reaktive Gruppe enthalten und mit
V) gegebenenfalls Estergruppen enthaltenden Polyalkylenoxidpolyetheralkoholen F), wobei das Äquivalentverhältnis von eingesetzten NCO-Gruppen der Komponente III) zu der Summe der gegenüber Isocyanaten reaktiven Gruppen der Komponenten II). IV) und V) 4:1 bis 1 000:1, beträgt.

3. Verfahren gemäß Anspruch 1, oder 2 dadurch gekennzeichnet, daß es sich bei den cellulosehaltigen Materialien um Papier oder papierähnliche Materialien handelt.

4. Verfahren gemäß Anspruch 1, oder 2 dadurch gekennzeichnet, daß das cellulosehaltige Material, das als Dispersion der Faserrohstoffe vorliegt, in der Masse behandelt wird, indem die wasserdispergierbaren Polyisocyanatgemische (I) der cellulosehaltigen Faserrohstoffdispersion als wäßrige Emulsion oder direkt zugesetzt werden.

5. Verfahren gemäß Anspruch 1, oder 2 dadurch gekennzeichnet, daß das cellulosehaltige Material, das in Form eines fertigen Rohpapiers vorliegt, in der Oberfläche mit dem wasserdispergierbaren Polyisocyanatgemisch (1) behandelt wird.

6. Verfahren gemäß Anspruch 1, oder 2 dadurch gekennzeichnet, daß 0,001 bis 50 Gew.-% wasserdispergierbares Polyisocyanatgemisch (1) bezogen auf trockenen, cellulosehaltigen Faserrohstoff eingesetzt werden.

**7.** Verfahren gemäß Anspruch 1, oder 2 dadurch gekennzeichnet, daß die wasserdispergierbaren Polyisocyanatgemische im Gemisch mit Reaktivleimungsmitteln, vorzugsweise mit Alkylketendimer, oder Alkenylbernsteinsäureanhydrid und/oder konventionellen Retentions- oder Naßfestmitteln eingesetzt werden.

## Claims

**1.** Process for the preparation of cellulose-containing material provided with a dry-strength and wet-strength finish and/or sized, characterised in that the cellulose-containing material is treated with a water-dispersible polyisocyanate mixture (I) with

∝) a content of isocyanate groups of 10 to 700 milliequivalents per 100 g of mixture,

β) a mean NCO functionality of ≥ 1.0,

γ) a content of ethylene oxide units of 0 to 30 % by weight, based on the mixture, wherein the polyethylene oxide chain has an average molecular weight (number average) of 100 to 3500, preferably 100 to 1000, particularly preferably 100 to 600 g/mol,

δ) a content of tertiary amino groups or ammonium groups obtained by the protonation and/or quaternisation therof, of 50 to 146.8 milliequivalents per 100 g of mixture,
and

ε) a content of hydrophobic radicals of 0-250 milliequivalents per 100 g of mixture,
characterised in that the water-dispersible polyisocyanates (I) are obtainable by reaction, in any desired sequence, of

II)

A) amines which contain a group which is reactive towards isocyanates, of the formula

A 1)

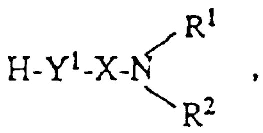

in which

$Y^1$ represents -O-, -NH- or $-NR^3-$, wherein $R^3$ represents methyl or ethyl,

$R^1$ and $R^2$

a) independently of one another represent $C_1$-$C_4$-alkyl or $C_3$-$C_6$-cycloalkyl,

b) represent a radical of the formula

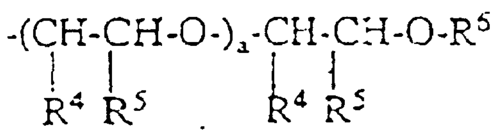

wherein $R^4$ and $K^5$ independently of one another represent hydrogen or methyl, with the condition that always one of the radicals represents hydrogen,

$R^6$ represents methyl or ethyl and

a assumes values from 0 to 10, or

c) represent a $C_2$-$C_4$-alkyl radical, substituted by one or more tertiary amino groups and/or ammonium groups obtained by the protonation and/or quaternisation thereof, of the formulae

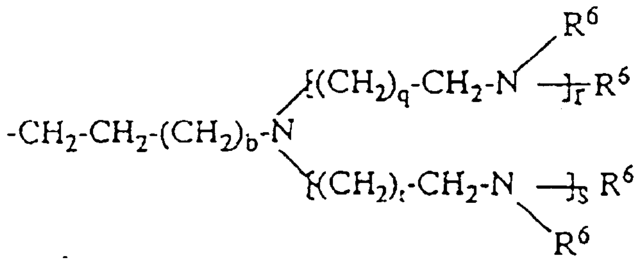

or

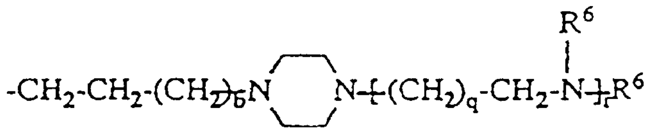

wherein

b assumes values from 0 to 2,

q and t independently of one another assume values of 1 or 2,

r and s independently of one another assume values from 0 to 3 and

$R^6$ has the abovementioned meaning,

or

d) together with the N atom to which they are bonded form a 5- or 6-membered ring of the formula

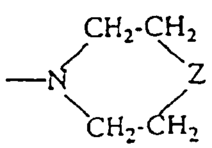

wherein

Z represents >O or

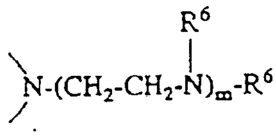

or

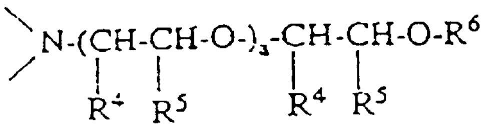

wherein

m assumes values from 0 to 2 and
a, $R^4$, $R^5$ and $R^6$ have the abovementioned meaning, and

X represents $C_2$- to $C_{10}$-alkylene, $C_5$- to $C_{10}$-cycloalkylene, a radical of the formula

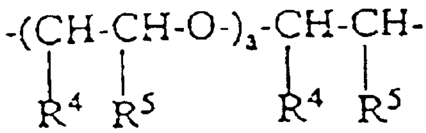

wherein $R^4$, $R^5$ and a have the abovementioned meaning,

or a radical of the formula

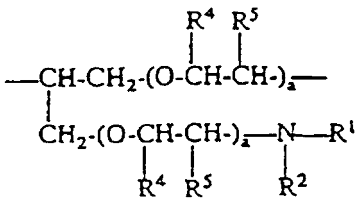

in which

a, $R^4$, $R^5$, $R^1$ and $R^2$ have the abovementioned meaning,

or

A 2) of the formula

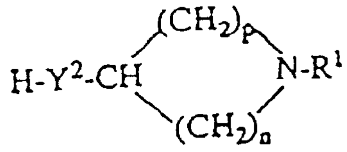

wherein

| | |
|---|---|
| $Y^2$ | represents -O-, -NH- or $NR^3$-, wherein $R^3$ has the abovementioned meaning, |
| n and p | independently of one another assume values of 1 or 2 |
| and $R^1$ | has the abovementioned meaning, |

or

A 3) of the formula

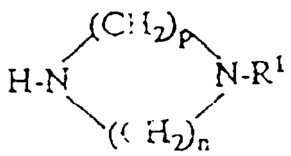

wherein n, p and $R^1$ have the abovementioned meaning,
or

A 4) of the formula

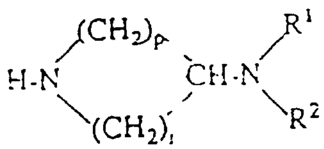

wherein

n, p' $R^1$ and $R^2$ have the abovementioned meaning,

or

C) the compounds which are reactive towards isocyanates and contain ammonium groups obtained by reaction of A) by protonation and/or quaternisation,
or
any desired mixtures of A) and C),
with

III) polyisocyanates E), wherein

the polyisocyanates E) are polyisocyanate mixtures which have an NCO content of 19 to 24% by weight, essentially comprise trimeric 1,6-diisocyanatohexane or 1-isocyanato-3,3,5-trimethyl-5-isocyanatomethyl-cyclohexane and optionally dimeric 1,6-diisocyanatohexane or 1-isocyanato3,3,5-trimethyl-5-isocyanatomethyl-cyclohexane and the corresponding higher homologues and contain isocyanurate groups and optionally uretdione groups, having

- an average NCO functionality of 2.0 to 8.0, preferably 2.0 to 6.0 and particularly preferably 2.1 to 4.4 and in particular 2.3 to 4.3, and
- a content of isocyanate groups of 10 to 50 % by weight, preferably 19 to 24 % by weight, based on the mixture III,

optionally with

IV) $C_4$-$C_{30}$-hydrocarbons G) which are straight-chain or branched, saturated or mono- or polyunsaturated and contain at least one group which is reactive towards isocyanates, and optionally with

V) mono- or polyvalent polyalkylene oxide polyether alcohols F) which contain a statistical average of 5.0 to 70 ethylene oxide units and optionally contain ester groups.

**2.** Process for the preparation of cellulose-containing material provided with a dry-strength and wet-strength finish and/or sized, characterised in that the cellulose-containing material is treated with a water-dispersible polyisocyanate mixture (I) with

α) a content of isocyanate groups of 47 to 595 milliequivalents, based on 100 g of mixture,

β) an average NCO functionality of 1.5 to 4.2,

γ) a content of ethylene oxide units of 7 to 30 % by weight, based on the mixture, wherein the polyethylene oxide chain has an average molecular weight (number average) of 100 to 3500, preferably 100 to 1000, particularly preferably 100 to 600 g/mol,
and

δ) a content of tertiary amino groups or ammonium groups obtained by the protonation and/or quaternisation thereof, of 1 to 146.8 milliequivalents per 100 g of mixture,

characterised in that the water-dispersible polyisocyanate mixtures (I) are obtainable by reaction, in any desired sequence, of

II) (cyclo)aliphatic amines which optionally contain ether, ester or amide groups, contain at least one group which is reactive towards isocyanates and contain at least one tertiary amino group and/or ammonium group, or mixtures thereof,
with

III) polyisocyanates E), wherein

the polyisocyanates E) are polyisocyanate mixtures which have an NCO content of 19 to 24% by weight, essentially comprise trimeric 1,6-diisocyanatohexane or 1-isocyanato-3, 3, 5-trimethyl-5-isocyanatomethyl -cyclohexane and optionally dimeric 1,6-diisocyanatohexane or 1-isocyanato-3,3,5-trimethyl-5-isocyanatomethyl-cyclohexane and the corresponding higher homologues and contain isocyanurate groups and optionally uretdione groups,

and optionally with

IV) $C_4$-$C_{30}$-hydrocarbons G) which are straight-chain or branched, saturated or mono- or polyunsaturated and contain at least one group which is reactive towards isocyanates,
and with

V) polyalkylene oxide polyether alcohols F) which optionally contain ester groups,
the ratio of equivalents of NCO groups of component III) employed to the sum of the groups of components II), IV) and V) which are reactive towards isocyanates being 4:1 to 1000:1.

**3.** Process according to Claim 1 or 2, characterised in that the cellulose-containing materials are paper or paperlike materials.

**4.** Process according to Claim 1 or 2, characterised in that the cellulose-containing material, which is present as a dispersion of the fibre raw materials, is treated in the pulp by adding the water-dispersible polyisocyanate mixtures (I) to the cellulose-containing fibre raw material dispersion as an aqueous emulsion or directly.

**5.** Process according to Claim 1 or 2, characterised in that the cellulose-containing material, which is present in the form of a finished base paper, is treated on the surface with the water-dispersible polyisocyanate mixture (I).

**6.** Process according to Claim 1 or 2, characterised in that 0.001 to 50 % by weight of water-dispersible polyisocyanate mixture (I), based on the dry, cellulose-containing fibre raw material, is employed.

**7.** Process according to Claim 1 or 2, characterised in that the water-dispersible polyisocyanate mixtures are employed as a mixture with reactive sizing agents, preferably with alkylketene dimers, or alkenylsuccinic anhydride and/or conventional retention or wet-strength agents.

**Revendications**

**1.** Procédé pour préparer une matière cellulosique en vue de lui conférer la résistance à sec et au mouillé et/ou en vue de la coller, caractérisé en ce que l'on traite la matière cellulosique par un mélange de polyisocyanates dispersable dans l'eau (1) ayant

α) une teneur en groupes isocyanates de 10 à 700 milliéquivalents pour 100 g de mélange,
β) une fonctionnalité moyenne en groupes NCO supérieure ou égale à 1,0,
γ) une teneur en motifs d'oxyde d'éthylène de 0 à 30 % du poids du mélange,
la chaîne d'oxyde de polyéthylène ayant un poids moléculaire moyen (moyenne en nombre) de 100 à 3500, de préférence de 100 à 1000 et plus spécialement de 100 à 600 g/mol,
δ) une teneur en groupes amino tertiaires ouen groupes ammonium résultant de la protonisation et/ou de la quaternisation des poupes précédents, de 50 à 146,8 milliéquivalents pour 100 g du mélange
et
ε) une teneur en groupes hydrophobes de 0 à 250 milliéquivalents pour 100 g du mélange, caractérisé en ce que l'on obtient les polyisocyanates dispersables dans l'eau (I) en
faisant réagir dans un ordre quelconque

II)

A) des amines contenant un groupe réactif avec les isocyanates, de formule

A 1)

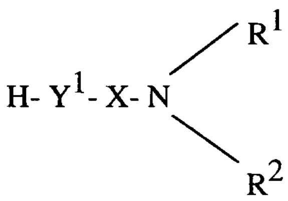

dans laquelle

$Y^1$ représente -O-, -NH- ou -$NR^3$ -, $R^3$ représentant un groupe méthyle ou éthyle,
$R^1$ et $R^2$ representent

a) chacun, indépendamment l'un de l'autre, un groupe alkyle en $C_1$-$C_4$ ou cycloalkyle en $C_3$-$C_6$,
b) un groupe de formule

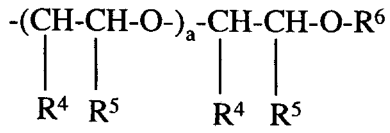

dans laquelle $R^4$ et $R^5$ représentent chacun, indépendamment l'un de l'autre, l'hydrogène ou un groupe méthyle, l'un de ces symboles devant toujours représenter l'hydrogène,

$R^6$ représente un groupe méthyle ou éthyle et
a est un nombre allant de 0 à 10, ou bien

c) un groupe alkyle en $C_2$-$C_4$ substitué par un ou plusieurs groupes amino tertiaires et/ou groupes ammonium résultant de la protonisation et/ou de la quaternisation des groupes précédents, répondant à l'une des formules

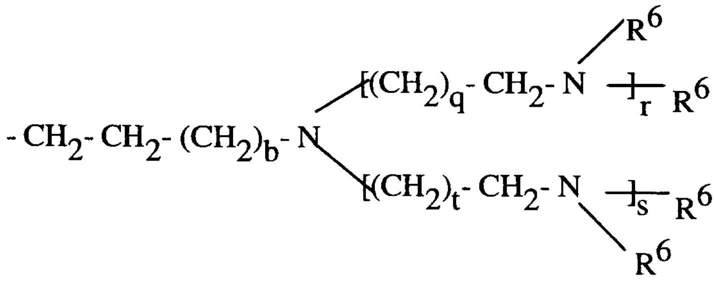

ou

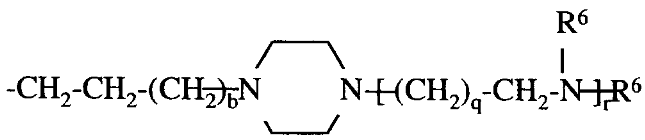

dans lesquelles

b est un nombre allant de 0 à 2,
q et t sont égaux chacun, indépendamment l'un de l'autre, à 1 ou 2,
r et s sont des nombres allant chacun, indépendamment l'un de l'autre, de 0 à 3 et
$R^6$ a les significations indiquées ci-dessus,

ou bien
d) ensemble avec l'atome d'azote auquel ils sont reliés, un cycle à 5 ou 6 chaînons de formule

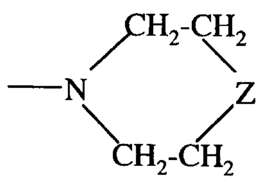

dans laquelle

Z représente

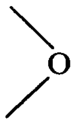 ou 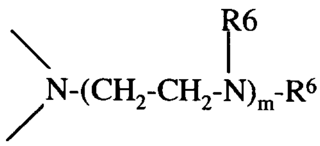 ou 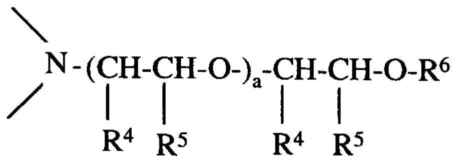

dans lesquels

m est un nombre allant de 0 à 2 et
a, $R^4$, $R^5$ et $R^6$ ont les significations indiquées ci-dessus,

X représente un groupe alkylène en $C_2$-$C_{10}$, cycloalkylène en $C_5$-$C_{10}$, un groupe de formule

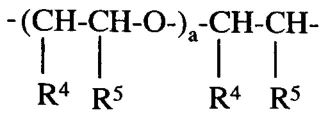

dans laquelle $R^4$, $R^5$ et a ont les significations indiquées ci-dessus, ou un groupe de formule

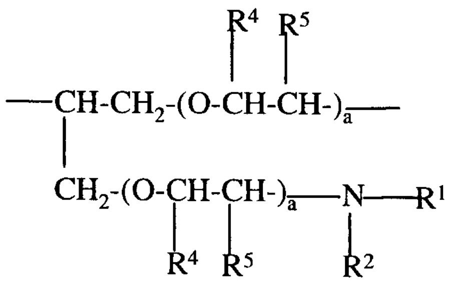

dans laquelle a, $R^4$, $R^5$, $R^1$ et $R^2$ ont les significations indiquées ci-dessus, ou bien

A 2) de formule

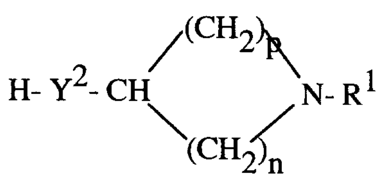

dans laquelle

$Y^2$ représente -O-, -NH- ou $NR^3$-, $R^3$ ayant les significations indiquées ci-dessus,

n et p sont égaux chacun, indépendamment l'un de l'autre, à 1 ou 2 et
$R^1$ a les significations indiquées ci-dessus

ou bien
A 3) de formule

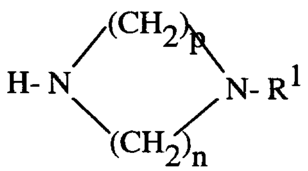

dans laquelle n, p et $R^1$ ont les significations indiquées ci-dessus
ou bien
A 4) de formule

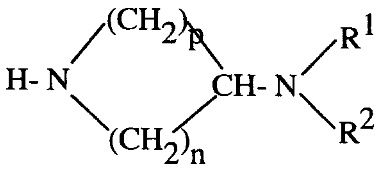

dans laquelle

n, p, $R^1$ et $R^2$ ont les significations indiquées ci-dessus,

ou bien
C) les composés réactifs avec les isocyanates, contenant des groupes ammonium obtenus par conversion de A) par protonisation ou quaternisation
ou bien
des mélanges quelconques de A) et C)
avec

III) des polyisocyanates E), étant entendu que les polyisocyanates E) sont des mélanges de polyisocyanates à une teneur en groupes NCO de 19 à 24 % en poids, à groupes isocyanurates et le cas échéant à groupes uretdiones, qui consistent essentiellement en le 1,6-diisocyanatohexane trimère ou le 1-isocyanato-3,3 5-triméthyl-5-isocyanatométhyl-cyclohexane et le cas échéant le 1,6-diisocyanatohexane dimère ou le 1-isocyanato-3,3,5-triméthyl-5-isocyanatométhyl-cyclohexane et les homologues supérieurs correspondants, ayant

- une fonctionnalité moyenne en NCO de 2,0 à 8,0, de préférence de 2,0 à 6,0, plus spécialement de 2,1 à 4,4 et dans les meilleures conditions de 2,3 à 4,3 et
- une teneur en groupes isocyanates de 10 à 50 % en poids, de préférence de 19 à 24 % en poids, par rapport au mélange III, le cas échéant avec

IV) des hydrocarbures en $C_4$-$C_{30}$ G) qui sont à chaîne droite ou ramifiés, saturés ou mono- ou poly-insaturés et contiennent au moins un groupe réactif avec les isocyanates, et le cas échéant avec
V) des (oxyde de polyalkylène)-polyéther-alcools F) mono- ou poly-valents, contenant en moyenne statistique 5,0 à 70 motifs d'oxyde d'éthylène et le cas échéant des groupes ester.

**2.** Procédé pour préparer une matière cellulosique collée et/ou à laquelle ont été conférées résistance au mouillé et résistance à sec, caractérisé en ce que l'on traite la matière cellulosique avec un mélange de polyisocyanates dispersable dans l'eau (I) ayant

α) une teneur en groupes isocyanates de 47 à 595 milliéquivalents pour 100 g du mélange,

β) une fonctionnalité moyenne en groupes NCO de 1,5 à 4,2,

γ) une teneur en motifs d'oxyde d'éthylène de 7 à 30 % en poids par rapport au mélange, la chaîne d'oxyde de polyéthylène ayant un poids moléculaire moyen (moyenne en nombre) de 100 à 3500, de préférence de 100 à 1000 et plus spécialement de 100 à 600 g/mol

et

δ) une teneur en groupes amino tertiaires ou en groupes ammonium résultant de la protonisation et/ou de la quaternisation des groupes précédents, de 1 à 146,8 milliéquivalents pour 100 g du mélange,

caractérisé en ce que l'on obtient les mélanges de polyisocyanates dispersables dans l'eau (I) en faisant réagir dans un ordre quelconque

II) des amines (cyclo)aliphatiques contenant le cas échéant des groupes éther, ester ou amide, qui contiennent au moins un groupe réactif avec les isocyanates et au moins un groupe amino tertiaire et/ou un groupe ammonium, ou leurs mélanges avec

III) des polyisocyanates E), étant entendu que les polyisocyanates E) sont des mélanges de polyisocyanates à une teneur en groupes NCO de 19 à 24 % en poids, à groupes isocyanurates et le cas échéant à groupes uretdiones, qui consistent essentiellement en le 1,6-diisocyanatohexane trimère ou le 1-isocyanato-3,3,5-triméthyl-5-isocyanatométhyl-cyclohexane et le cas échéant le 1,6-diisocyanatohexane dimère ou le 1-isocyanato-3,3,5-triméthyl-5-isocyanatométhyl-cyclohexane et les homologues supérieurs correspondants et le cas échéant avec

IV) des hydrocarbures en $C_4$-$C_{30}$ G), qui sont à chaîne droite ou ramifiés, saturés ou mono- ou poly-insaturés et contiennent au moins un groupe réactif avec les isocyanates, et avec

V) des (oxyde de polyalkylène)-polyéther-alcools F) contenant le cas échéant des groupes ester

à un rapport de 4 : 1 à 1000 : 1 entre les équivalents de groupes NCO du composant III mis en oeuvre et la somme des groupes réactifs avec les isocyanates des composants II), IV) et V).

**3.** Procédé selon la revendication 1 ou 2, caractérisé en ce que les matières cellulosiques consistent en papier ou matières analogues au papier.

**4.** Procédé selon la revendication 1 ou 2, caractérisé en ce que la matière cellulosique qui est à l'état de dispersion d'une matière première fibreuse, est traitée dans la masse, par addition des mélanges de poiyisocyanates dispersables dans l'eau (I) à l'état d'émulsion aqueuse ou directement à la dispersion de matière fibreuse cellulosique.

**5.** Procédé selon la revendication 1 ou 2, caractérisé en ce que la matière cellulosique, qui est à l'état de papier brut fini, est traitée en surface par le mélange de polyisocyanates dispersable dans l'eau (I).

**6.** Procédé selon la revendication 1 ou 2, caractérisé en ce que l'on utilise de 0,001 à 50 % du mélange de polyisocyanates dispersable dans l'eau (I) par rapport au poids de la matière première fibreuse cellulosique sèche.

**7.** Procédé selon la revendication 1 ou 2, caractérisé en ce que les mélanges de polyisocyanates dispersables dans l'eau sont mis en oeuvre en mélange avec des colles réactives, de préférence un dimère d'alkylcétène ou un anhydride d'acide alcénylsuccinique, et/ou avec des agents de rétention ou additifs conférant la résistance au mouillé, de types classiques.